(19) Europäisches Patentamt / European Patent Office / Office européen des brevets

(11) **EP 3 929 260 B1**

(12) **EUROPEAN PATENT SPECIFICATION**

(45) Date of publication and mention of the grant of the patent:
**17.12.2025 Bulletin 2025/51**

(21) Application number: **20758923.5**

(22) Date of filing: **12.02.2020**

(51) International Patent Classification (IPC):
***C09J 11/06*** (2006.01) ***C08L 43/04*** (2006.01)
***C09J 143/04*** (2006.01) ***C09J 163/00*** (2006.01)
***C09J 171/00*** (2006.01) ***C09J 201/10*** (2006.01)
***C08L 63/00*** (2006.01) ***C08L 71/00*** (2006.01)
***C08F 265/06*** (2006.01) ***C08L 51/00*** (2006.01)
***C08G 65/336*** (2006.01)

(52) Cooperative Patent Classification (CPC):
(C-Sets available)
**C08G 65/336; C08F 265/06; C08L 51/003; C08L 63/00; C09J 11/06; C09J 201/10;**
C08F 2438/01 (Cont.)

(86) International application number:
**PCT/JP2020/005346**

(87) International publication number:
**WO 2020/170908 (27.08.2020 Gazette 2020/35)**

(54) **CURABLE COMPOSITION**

HÄRTBARE ZUSAMMENSETZUNG

COMPOSITION DURCISSABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.02.2019 JP 2019026347**

(43) Date of publication of application:
**29.12.2021 Bulletin 2021/52**

(73) Proprietor: **Kaneka Corporation**
**Osaka-shi, Osaka 530-8288 (JP)**

(72) Inventor: **MIYAFUJI, Kiyoshi**
**Hyogo 676-8688 (JP)**

(74) Representative: **Vossius & Partner**
**Patentanwälte Rechtsanwälte mbB**
**Siebertstraße 3**
**81675 München (DE)**

(56) References cited:
**EP-A1- 3 342 819** **WO-A1-2017/057719**
**WO-A1-2018/003688** **WO-A1-2021/059972**
**JP-A- 2002 309 077** **JP-A- 2002 309 077**
**JP-A- 2004 225 020** **JP-A- 2005 213 445**
**JP-A- H02 228 365** **US-A1- 2022 145 068**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 929 260 B1

(52) Cooperative Patent Classification (CPC): (Cont.)

C-Sets
**C08F 265/06, C08F 220/14, C08F 220/1818, C08F 230/08;**
**C08L 63/00, C08L 33/068, C08L 43/04, C08L 71/02**

## Description

### Technical Field

The present invention relates to a multi-part curable composition.

### Background Art

In the fields of automobiles, aircrafts, and railcars, the materials of their structural components are shifting from iron and steel to lightweight materials such as aluminum, magnesium, and carbon fiber composites for the purpose of weight reduction, and a multi-material technology using a plurality of materials in one vehicle body is becoming widespread. Joining between different kinds of materials is sometimes difficult to accomplish by spot welding or laser welding and, for this reason, adhesive joining using an adhesive is attracting attention. Since steel plates, aluminum alloys, and fiber-reinforced composites have different linear expansion coefficients, the adhesive needs to be flexible enough to accommodate thermal distortion. In this regard, epoxy resins which have high stiffness could be disadvantageous. Thus, there is a growing demand for a new structural adhesive material that has a high elastic modulus and is flexible.

A composition composed of a reactive silicon group-containing polyoxyalkylene polymer and an epoxy resin and having both a high strength at break and flexibility is known as an adhesive (see Patent Literature 1, for example). However, this composition could fail to exhibit sufficient strength for use as a structural adhesive.

The use of a polyoxyalkylene polymer having one or more reactive silicon groups in one terminal moiety as the reactive silicon group-containing polyoxyalkylene polymer is known to offer an improvement in strength. There are also known a combination of the polyoxyalkylene polymer and an epoxy resin (see Patent Literature 2, for example), a combination of the polyoxyalkylene polymer and a reactive silicon group-containing (meth)acrylic ester polymer (see Patent Literature 3, for example), and a combination of the polyoxyalkylene polymer, an epoxy resin, and a reactive silicon group-containing (meth)acrylic ester polymer (see Patent Literature 4, for example). However, it is difficult to obtain a cured product complete with properties required of structural adhesives, in particular high stiffness and flexibility high enough to accommodate thermal distortion.

In the context of curable compositions having excellent bonding performance, Patent Literature 5 discloses a reactive silicon group-containing (meth)acrylic ester polymer containing a macromonomer having a polymerizable unsaturated group as a constituent monomer. Patent Literature 6 relates to a 2-pack type curable composition comprising an agent A containing (A) a reactive silicon group-containing polyoxyalkylene polymer, (B) a copolymer whose molecular chain comprises substantially one or more kinds of acrylic acid alkyl ester monomer units and/or methacrylic acid alkyl monomer units, (C) a hardener for an epoxy resin and (D) a silane coupling agent, and an agent B containing (E) an epoxy resin, (F) a condensing catalyst and (G) water.

### Citation List

### Patent Literature

PTL 1: Japanese Laid-Open Patent Application Publication No. H02-214759
PTL 2: Japanese Laid-Open Patent Application Publication No. 2015-105324
PTL 3: WO 2013/180203
PTL 4: Japanese Laid-Open Patent Application Publication No. 2017-019908
PTL 5: WO 2017/057719
PTL 6: JP-A-200230977

### Summary of Invention

### Technical Problem

In view of the above circumstances, the present invention aims to provide: a curable composition the curing of which gives a cured product having high strength, high stiffness, and flexibility; and a cured product obtained by curing the composition.

**Solution to Problem**

As a result of intensive studies with the goal of solving the above problems, the present inventors have completed the invention as described below.

That is, the present invention relates to a multi-part curable composition including:

an A part including a polyoxyalkylene polymer (A) having a reactive silicon group, a (meth)acrylic ester polymer (B) having a reactive silicon group, and an epoxy resin curing agent (D), each of the reactive silicon groups of the polyoxyalkylene polymer (A) and the (meth)acrylic ester polymer (B) being represented by the following formula (1): $-SiR^5{}_cX_{3-c}$ (1), wherein $R^5$ represents a substituted or unsubstituted hydrocarbon group having 1 to 20 carbon atoms, X represents a hydroxy group or a hydrolyzable group, and c represents 0 or 1; and
a B part including an epoxy resin (C) and a silanol condensation catalyst (E), wherein
the (meth)acrylic ester polymer (B) is a polymer containing constituent monomers including 40 to 70% by weight of an alkyl (meth)acrylate (bl) having an alkyl having 1 to 3 carbon atoms, a monomer (b2) having a reactive silicon group and a polymerizable unsaturated group, and a macromonomer (b3) that is a (meth)acrylic ester polymer having a polymerizable unsaturated group.

Further preferred embodiments of the composition are defined below and in the annexed claims. Moreover, the invention relates to a structural adhesive including the multi-part curable composition according to the invention, and to a cured product obtained by curing the multi-part curable composition according to the invention.

Advantageous Effects of Invention

The present invention can provide: a curable composition the curing of which gives a cured product having high strength, high stiffness, and flexibility; and a cured product obtained by curing the composition. Further, a curable composition according to an embodiment of the present invention can exhibit high bonding performance after being subjected to a moisture-heat exposure test.

**Description of Embodiments**

The present invention is directed to a multi-part curable composition including: an A part including a polyoxyalkylene polymer (A) having a reactive silicon group, a (meth)acrylic ester polymer (B) having a reactive silicon group, and an epoxy resin curing agent (D); and a B part including an epoxy resin (C) and a silanol condensation catalyst (E). In the multi-part curable composition, the (meth)acrylic ester polymer (B) is a polymer containing constituent monomers including 40 to 70% by weight of an alkyl (meth)acrylate (b1) having an alkyl having 1 to 3 carbon atoms, a monomer (b2) having a reactive silicon group and a polymerizable unsaturated group, and a macromonomer (b3) that is a (meth)acrylic ester polymer having a polymerizable unsaturated group.

With the use of the curable composition having the above features, a cured product having high stiffness and having flexibility can be obtained. A cured product excellent in retention of bonding performance can also be obtained.

<<Polyoxyalkylene Polymer (A) Having Reactive Silicon Group>>

<Reactive Silicon Group>

The polyoxyalkylene polymer (A) has a reactive silicon group represented by the following formula (1).

$$-SiR^5{}_cX_{3-c} \qquad (1)$$

In the formula, $R^5$ represents a substituted or unsubstituted hydrocarbon group having 1 to 20 carbon atoms, X represents a hydroxy group or a hydrolyzable group, and c represents 0 or 1.

The number of carbon atoms in the hydrocarbon group represented by $R^5$ is preferably from 1 to 10, more preferably from 1 to 5, and even more preferably from 1 to 3. Specific examples of $R^5$ include methyl, ethyl, chloromethyl, methoxymethyl, and N,N-diethylaminomethyl groups. $R^5$ is preferably a methyl group, an ethyl group, a chloromethyl group, or a methoxymethyl group and more preferably a methyl group or a methoxymethyl group.

Examples of X include a hydroxy group, halogens, and alkoxy, acyloxy, ketoximate, amino, amide, acid amide, aminooxy, mercapto, and alkenyloxy groups. Among these, alkoxy groups such as methoxy and ethoxy groups are more preferred in terms of moderate hydrolyzability and ease of handling. Particularly preferred are methoxy and ethoxy groups.

Specific examples of the reactive silicon group of the polyoxyalkylene polymer (A) include, but are not limited to,

trimethoxysilyl, triethoxysilyl, tris(2-propenyloxy)silyl, triacetoxysilyl, dimethoxymethylsilyl, diethoxymethylsilyl, dimethoxyethylsilyl, (chloromethyl)dimethoxysilyl, (chloromethyl)diethoxysilyl, (methoxymethyl)dimethoxysilyl, (methoxymethyl)diethoxysilyl, (N,N-diethylaminomethyl)dimethoxysilyl, and (N,N-diethylaminomethyl)diethoxysilyl groups. Among these, methyldimethoxysilyl, trimethoxysilyl, triethoxysilyl, (chloromethyl)dimethoxysilyl, (methoxymethyl)dimethoxysilyl, (methoxymethyl)diethoxysilyl, and (N,N-diethylaminomethyl)dimethoxysilyl groups are preferred since they exhibit high activity and allow for obtaining a cured product having good mechanical properties. In order to obtain a cured product having high stiffness, trimethoxysilyl and triethoxysilyl groups are more preferred, and a trimethoxysilyl group is even more preferred.

The polyoxyalkylene polymer (A) may have more than one reactive silicon groups on average per terminal moiety. Stating that the polyoxyalkylene polymer (A) has more than one reactive silicon groups on average per terminal moiety means that the polyoxyalkylene polymer (A) includes a polyoxyalkylene having two or more reactive silicon groups in one terminal moiety as represented by the formula (2) given below. The polyoxyalkylene polymer (A) may consist solely of a polyoxyalkylene having two or more reactive silicon groups in one terminal moiety or may include both a polyoxyalkylene having two or more reactive silicon groups in one terminal moiety and a polyoxyalkylene having one reactive silicon group in one terminal moiety. The terminal moieties of one polyoxyalkylene molecule may include both a terminal moiety having two or more reactive silicon groups and a terminal moiety having one reactive silicon group. The polyoxyalkylene polymer (A) may include a polyoxyalkylene having a terminal moiety having no reactive silicon group, although the polyoxyalkylene polymer (A) as a whole has more than one reactive silicon groups on average per terminal moiety.

[Chem 1]

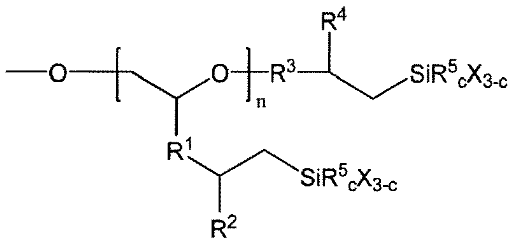

(2)

In the formula, $R^1$ and $R^3$ are each independently a divalent linking group having 1 to 6 carbon atoms, the atoms bonded to carbon atoms adjacent respectively to $R^1$ and $R^3$ are each independently carbon, oxygen, or nitrogen, $R^2$ and $R^4$ are each independently hydrogen or a hydrocarbon group having 1 to 10 carbon atoms, n is an integer from 1 to 10, and $R^5$, X, and c are as defined above for the formula (1).

$R^1$ and $R^3$ may each independently be a divalent organic group having 1 to 6 carbon atoms or a hydrocarbon group optionally containing an oxygen atom. The number of carbon atoms in the hydrocarbon group is preferably from 1 to 4, more preferably from 1 to 3, and even more preferably 1 or 2. Specific examples of $R^1$ include $CH_2OCH_2$, $CH_2O$, and $CH_2$, and $R^1$ is preferably $CH_2OCH_2$. Specific examples of $R^3$ include $CH_2$ and $CH_2CH_2$, and $R^3$ is preferably $CH_2$.

The number of carbon atoms in the hydrocarbon groups represented by $R^2$ and $R^4$ is preferably from 1 to 5, more preferably from 1 to 3, and even more preferably 1 or 2. Specific examples of $R^2$ and $R^4$ include a hydrogen atom, a methyl group, and an ethyl group, and $R^2$ and $R^4$ are preferably hydrogen atoms or methyl groups and more preferably hydrogen atoms.

In a particularly preferred embodiment, the terminal moiety represented by the formula (2) contains $CH_2OCH_2$ as $R^1$, $CH_2$ as $R^3$, and hydrogen atoms as $R^2$ and $R^4$. The letter n is preferably an integer from 1 to 5, more preferably an integer from 1 to 3, and even more preferably 1 or 2. It should be noted that n is not limited to one value and terminal moieties having different values of n may be present.

In the polyoxyalkylene polymer (A), the number of reactive silicon groups is preferably more than 1.0, more preferably 1.1 or more, even more preferably 1.5 or more, and still even more preferably 2.0 or more on average per terminal moiety. The average number is preferably 5 or less and more preferably 3 or less.

In the polyoxyalkylene polymer (A), the number of terminal moieties having more than one reactive silicon groups is preferably 0.5 or more, more preferably 1.0 or more, even more preferably 1.1 or more, and still even more preferably 1.5 or more on average per molecule. The average number is preferably 4 or less and more preferably 3 or less.

The polyoxyalkylene polymer (A) may include a reactive silicon group other than those in the terminal moieties. However, it is preferable that the polyoxyalkylene polymer (A) should include reactive silicon groups only in the terminal moieties, because in this case a rubbery cured product that exhibits a high degree of elongation and a low elastic modulus is likely to be obtained.

In the polyoxyalkylene polymer (A), the average number of reactive silicon groups per molecule is preferably more than 1.0, more preferably 1.2 or more, even more preferably 1.3 or more, still even more preferably 1.5 or more, and particularly preferably 1.7 or more. The average number is preferably 6.0 or less, more preferably 5.5 or less, and most

preferably 5.0 or less. If the average number of reactive silicon groups per molecule is 1.0 or less, this could lead to a failure to obtain a cured product having high strength. If the average number of reactive silicon groups per molecule is more than 6.0, this could lead to a failure to obtain a cured product that exhibits a high degree of elongation.

<Main Chain Structure>

The polyoxyalkylene polymer (A) is not limited to having a particular main chain structure, and examples of the main chain structure of the polyoxyalkylene polymer (A) include polyoxyethylene, polyoxypropylene, polyoxybutylene, polyoxytetramethylene, polyoxyethylene-polyoxypropylene copolymer, and polyoxypropylene-polyoxybutylene copolymer. Among these, polyoxypropylene is preferred.

The number-average molecular weight of the polyoxyalkylene polymer (A), as determined by GPC as a polystyrene equivalent molecular weight, is preferably from 3,000 to 100,000, more preferably from 3,000 to 50,000, and particularly preferably from 3,000 to 30,000. If the number-average molecular weight is less than 3,000, the amount of introduced reactive silicon groups is large, and this could be disadvantageous in terms of production cost. If the number-average molecular weight is more than 100,000, the polymer has a high viscosity, which tends to be disadvantageous in terms of workability.

The molecular weight of the polyoxyalkylene polymer (A) can be expressed also as a terminal group equivalent molecular weight. The terminal group equivalent molecular weight is determined as follows: before introduction of reactive silicon groups, an organic polymer precursor is subjected to titration analysis based on the principles of the hydroxy value measurement method as specified in JIS K 1557 and the iodine value measurement method as specified in JIS K 0070 to directly measure the terminal group concentration, based on which the terminal group equivalent molecular weight is calculated taking into account the architecture of the organic polymer (in particular, the degree of branching which depends on the polymerization initiator used). The terminal group equivalent molecular weight of the polyoxyalkylene polymer (A) can be determined also by creating a calibration curve representing the relationship between the number-average molecular weight of the organic polymer precursor as determined by common GPC analysis and the terminal group equivalent molecular weight, determining the number-average molecular weight of the polyoxyalkylene polymer (A) by GPC, and converting the determined number-average molecular weight to the terminal group equivalent molecular weight based on the calibration curve.

The polyoxyalkylene polymer (A) is not limited to having a particular molecular weight distribution (Mw/Mn), but preferably has a narrow molecular weight distribution. The polydispersity index Mw/Mn is preferably less than 2.0, more preferably 1.6 or less, even more preferably 1.5 or less, and particularly preferably 1.4 or less. The molecular weight distribution of the polyoxyalkylene polymer (A) can be determined from the number-average molecular weight and weight-average molecular weight obtained by GPC analysis.

The main chain structure of the polyoxyalkylene polymer (A) of the present invention may be linear or branched.

<Method of Synthesizing Polyoxyalkylene Polymer (A)>

Hereinafter, how to synthesize the polyoxyalkylene polymer (A) will be described. The preferred polyoxyalkylene polymer (A) having more than 1.0 reactive silicon groups on average per terminal moiety is preferably obtained by introducing two or more unsaturated carbon-carbon bonds into one terminal moiety of a hydroxy-terminated polymer resulting from polymerization and then reacting a reactive silicon group-containing compound with the introduced unsaturated carbon-carbon bonds. The following describes this preferred synthesis method.

(Polymerization)

The synthesis of the polyoxyalkylene polymer (A) is preferably carried out using a method in which an epoxy compound is polymerized with a hydroxy group-containing initiator in the presence of a double metal cyanide complex catalyst such as zinc hexacyanocobaltate-glyme complex.

Examples of the hydroxy group-containing initiator include compounds containing one or more hydroxy groups, such as ethylene glycol, propylene glycol, glycerin, pentaerythritol, low-molecular-weight polyoxypropylene glycol, polyoxypropylene triol, allyl alcohol, polypropylene monoallyl ether, and polypropylene monoalkyl ether.

Examples of the epoxy compound include alkylene oxides such as ethylene oxide and propylene oxide and glycidyl ethers such as methyl glycidyl ether and allyl glycidyl ether. Among these, propylene oxide is preferred.

(Introduction of Unsaturated Carbon-Carbon Bonds)

The introduction of two or more unsaturated carbon-carbon bonds into one terminal moiety is preferably accomplished using a method in which an alkali metal salt is allowed to act on the hydroxy-terminated polymer and

thereafter the polymer is reacted first with an unsaturated carbon-carbon bond-containing epoxy compound and then with an unsaturated carbon-carbon bond-containing halogenated hydrocarbon compound. With the use of this method, the molecular weight and molecular weight distribution of the polymer main chain can be controlled depending on the polymerization conditions, and at the same time the reactive groups can be introduced efficiently and reliably.

The alkali metal salt used in the present invention is preferably sodium hydroxide, sodium methoxide, sodium ethoxide, potassium hydroxide, potassium methoxide, or potassium ethoxide and more preferably sodium methoxide or potassium methoxide. Sodium methoxide is particularly preferred in terms of availability.

The temperature at which the alkali metal salt is allowed to act on the hydroxy-terminated polymer is preferably from 50 to 150°C and more preferably from 110 to 140°C. The time for which the alkali metal salt is allowed to act on the hydroxy-terminated polymer is preferably from 10 minutes to 5 hours and more preferably from 30 minutes to 3 hours.

A compound represented by the following formula (3) is particularly suitable for use as the unsaturated carbon-carbon bond-containing epoxy compound in the present invention ($R^1$ and $R^2$ in the formula are as defined above).

[Chem 2]

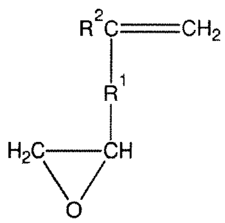

(3)

Specifically, allyl glycidyl ether, methallyl glycidyl ether, glycidyl acrylate, glycidyl methacrylate, butadiene monoxide, and 1,4-cyclopentadiene monoepoxide are preferred in terms of reaction activity, and allyl glycidyl ether is particularly preferred.

In the present invention, the amount of the unsaturated carbon-carbon bond-containing epoxy compound to be added can be freely chosen taking into account the amount of the unsaturated carbon-carbon bonds to be introduced into the polymer and the reactivity of the epoxy compound with the polymer. In particular, the molar ratio of the epoxy compound to the hydroxy groups of the hydroxy-terminated polymer is preferably 0.2 or more and more preferably 0.5 or more. The molar ratio is preferably 5.0 or less and more preferably 2.0 or less.

In the present invention, the reaction temperature at which the hydroxy group-containing polymer is subjected to a ring-opening addition reaction with the unsaturated carbon-carbon bond-containing epoxy compound is preferably from 60 to 150°C and more preferably from 110 to 140°C.

Examples of the unsaturated carbon-carbon bond-containing halogenated hydrocarbon compound used in the present invention include vinyl chloride, allyl chloride, methallyl chloride, vinyl bromide, allyl bromide, methallyl bromide, vinyl iodide, allyl iodide, and methallyl iodide. In terms of ease of handling, it is more preferable to use allyl chloride or methallyl chloride.

The amount of the unsaturated carbon-carbon bond-containing halogenated hydrocarbon compound to be added is not limited to a particular range. The molar ratio of the halogenated compound to the hydroxy groups of the hydroxy-terminated polymer is preferably 0.7 or more and more preferably 1.0 or more. The molar ratio is preferably 5.0 or less and more preferably 2.0 or less.

The temperature at which the unsaturated carbon-carbon bond-containing halogenated hydrocarbon compound is reacted with the hydroxy-terminated polymer is preferably from 50 to 150°C and more preferably from 110 to 140°C. The reaction time is preferably from 10 minutes to 5 hours and more preferably from 30 minutes to 3 hours.

(Introduction of Reactive Silicon Groups)

The introduction of reactive silicon groups is not limited to being carried out by a particular method, and can be accomplished using any known method. The following are examples of the introduction method.

(i) Method in which a hydrosilane compound is added to an unsaturated carbon-carbon bond-containing polymer by a hydrosilylation reaction.

(ii) Method in which an unsaturated carbon-carbon bond-containing polymer is reacted with a compound having both a group capable of reacting with the unsaturated carbon-carbon bond to form a bond and a reactive silicon group (this compound is referred to also as a silane coupling agent). For example, the group capable of reacting with the unsaturated carbon-carbon bond to form a bond is, but not limited to, a mercapto group.

(iii) Method in which a reactive group-containing polymer is reacted with a silane coupling agent. Examples of the

combination of the reactive group of the reactive group-containing polymer and the reactive group of the silane coupling agent include, but are not limited to, a combination of a hydroxy group and an isocyanate group, a combination of a hydroxy group and an epoxy group, a combination of an amino group and an isocyanate group, a combination of an amino group and a thioisocyanate group, a combination of an amino group and an epoxy group, a combination of an amino group and an α,β-unsaturated carbonyl group (Michael addition reaction), a combination of a carboxy group and an epoxy group, and a combination of an unsaturated bond and a mercapto group.

The method (i) is preferred since the reaction is easy to conduct, the amount of the reactive silicon groups to be introduced can be adjusted, and the resulting reactive silicon group-containing polyoxyalkylene polymer (A) has stable physical properties. The methods (ii) and (iii) are preferred since these methods permit a wide variety of choices of reactions and allow the degree of reactive silicon group introduction to be easily increased.

Examples of the hydrosilane compound that can be used in the method (i) include, but are not limited to, trimethoxysilane, triethoxysilane, tris(2-propenyloxy)silane, triacetoxysilane, dimethoxymethylsilane, diethoxymethylsilane, dimethoxyethylsilane, (chloromethyl)dimethoxysilane, (chloromethyl)diethoxysilane, (methoxymethyl)dimethoxysilane, (methoxymethyl)diethoxysilane, (N,N-diethylaminomethyl)dimethoxysilane, and (N,N-diethylaminomethyl) diethoxysilane.

As for the amount of the hydrosilane compound used, the molar ratio of the compound to the unsaturated carbon-carbon bonds of the precursor polymer (the number of moles of hydrosilane/the number of moles of unsaturated carbon-carbon bonds) is preferably from 0.05 to 10 in terms of reactivity and more preferably from 0.3 to 2 in terms of economy.

The hydrosilylation reaction can be accelerated by using a catalyst. The hydrosilylation catalyst used may be any of known catalysts such as various complexes of cobalt, nickel, iridium, platinum, palladium, rhodium, and ruthenium. Examples of the catalyst that can be used include: platinum supported on a support such as alumina, silica, or carbon black; chloroplatinic acid; a chloroplatinic acid complex composed of chloroplatinic acid and another compound such as an alcohol, an aldehyde, or a ketone; platinum-olefin complexes such as $Pt(CH_2=CH_2)_2(PPh_3)$ and $Pt(CH_2=CH_2)_2Cl_2$; platinum-vinyl siloxane complexes such as $Pt\{(vinyl)Me_2SiOSiMe_2(vinyl)\}$ and $Pt\{Me(vinyl)SiO\}_4$; platinum-phosphine complexes such as $Pt(PPh_3)_4$ and $Pt(PBu_3)_4$; and platinum-phosphite complexes such as $Pt\{P(OPh)_3\}_4$. The use of a platinum catalyst such as chloroplatinic acid or a platinum-vinyl siloxane complex is preferred in terms of reaction efficiency.

Examples of the silane coupling agent that can be used in the method (ii) or (iii) include: mercaptosilanes reactive with unsaturated bonds, such as 3-mercaptopropyltrimethoxysilane, 3-mercaptopropyldimethoxymethylsilane, 3-mercaptopropyltriethoxysilane, mercaptomethyltriethoxysilane, and mercaptomethyldimethoxymethylsilane; isocyanatosilanes reactive with hydroxy groups, such as 3-isocyanatopropyltrimethoxysilane, 3-isocyanatopropyldimethoxymethylsilane, 3-isocyanatopropyltriethoxysilane, isocyanatomethyltrimethoxysilane, isocyanatomethyl triethoxysilane, and isocyanatomethyldimethoxymethylsilane; epoxysilanes reactive with hydroxy, amino, or carboxy groups, such as 3-glycidoxypropyltrimethoxysilane, 3-glycidoxypropyldimethoxymethylsilane, 3-glycidoxypropyltriethoxysilane, glycidoxymethyltrimethoxysilane, glycidoxymethyltriethoxysilane, and glycidoxymethyldimethoxymethylsilane; aminosilanes reactive with isocyanate or thioisocyanate groups, such as 3-aminopropyltrimethoxysilane, 3-aminopropyldimethoxymethylsilane, 3-aminopropyltriethoxysilane, 3-(2-aminoethyl)propyltrimethoxysilane, 3-(2-aminoethyl)propyldimethoxymethylsilane, 3-(2-aminoethyl)propyltriethoxysilane, 3-(N-ethylamino)-2-methylpropyltrimethoxysilane, 3-ureidopropyltrimethoxysilane, 3-ureidopropyltriethoxysilane, N-phenyl-3-aminopropyltrimethoxysilane, N-benzyl-3-aminopropyltrimethoxysilane, N-cyclohexylaminomethyltriethoxysilane, N-cyclohexylaminomethyldiethoxymethylsilane, N-phenylaminomethyltrimethoxysilane, (2-aminoethyl)aminomethyltrimethoxysilane, N,N'-bis[3-(trimethoxysilyl)propyl]ethylenediamine, and bis(3-(trimethoxysilyl)propyl)amine; and hydroxyalkylsilanes such as 3-hydroxypropyltrimethoxysilane and hydroxymethyltriethoxysilane.

The main chain of the polymer (A) may include an ester bond or an amide segment represented by the following formula (4) insofar as the effect of the present invention is not impaired.

$$-NR^6-C(=O)- \qquad (4)$$

In the formula, $R^6$ represents an organic group having 1 to 10 carbon atoms or a hydrogen atom.

A cured product obtained from a curable composition including the polymer (A) containing an ester bond or an amide segment can have high hardness and high strength thanks to the action of hydrogen bonds. However, the polymer (A) containing an amide segment could be cleaved due to heat or any other cause. Additionally, the curable composition including the polymer (A) containing an amide segment tends to have a high viscosity. In view of the above advantages and disadvantages, a polyoxyalkylene containing an amide segment may be used as the polymer (A), or a polyoxyalkylene free of any amide segment may be used as the polymer (A).

Examples of the amide segment represented by the formula (4) include an amide segment formed by a reaction between an isocyanate group and a hydroxy group, an amide segment formed by a reaction between an amino group and a

carbonate, an amide segment formed by a reaction between an isocyanate group and an amino group, and an amide segment formed by a reaction between an isocyanate group and a mercapto group. A segment formed by a reaction between an amide segment containing an activated hydrogen atom and an isocyanate group is also categorized as the amide segment represented by the formula (4).

An example of the method of producing the amide segment-containing polymer (A) is a method in which a polyoxyalkylene having an activated hydrogen-containing terminal group is reacted with an excess amount of polyisocyanate compound to synthesize a polymer terminated by an isocyanate group and after or simultaneously with the synthesis, the group Z of a silicon compound represented by the following formula (5) is reacted with all or part of the isocyanate groups of the synthesized polymer.

$$Z\text{-}R^7\text{-}SiR^5_cX_{3-c} \qquad (5)$$

In the formula, $R^5$, X, and c are as defined above, $R^7$ is a divalent organic group and preferably a divalent hydrocarbon group having 1 to 20 carbon atoms, Z is a hydroxy, carboxy, mercapto, or primary or secondary amino group.

Examples of the silicon compound represented by the formula (5) include, but are not limited to: amino group-containing silanes such as γ-aminopropyldimethoxymethylsilane, γ-aminopropyltrimethoxysilane, N-(β-aminoethyl)-γ-aminopropyltrimethoxysilane, N-(β-aminoethyl)-γ-aminopropyldimethoxymethylsilane, (N-phenyl)-γ-aminopropyltrimethoxysilane, and N-ethylaminoisobutyltrimethoxysilane; hydroxy group-containing silanes such as γ-hydroxypropyltrimethoxysilane; and mercapto group-containing silanes such as γ-mercaptopropyltrimethoxysilane and mercaptomethyltriethoxysilane. Additionally, as described in Japanese Laid-Open Patent Application Publication No. H6-211879 (U.S. Patent No. 5364955), Japanese Laid-Open Patent Application Publication No. H10-53637 (U.S. Patent No. 5756751), Japanese Laid-Open Patent Application Publication No. H10-204144 (EP 0831108), Japanese Laid-Open Patent Application Publication No. 2000-169544, and Japanese Laid-Open Patent Application Publication No. 2000-169545, a product of a Michael addition reaction between any of various α,β-unsaturated carbonyl compounds and any of various primary amino group-containing silanes or a product of a Michael addition reaction between any of various (meth)acryloyl group-containing silanes and any of various primary amino group-containing compounds can also be used as the silicon compound represented by the formula (5).

Another example of the method of producing the amide segment-containing polymer (A) is a method in which a polyoxyalkylene terminated by an activated hydrogen-containing group is reacted with a reactive silicon group-containing isocyanate compound represented by the following formula (6).

$$O{=}C{=}N\text{-}R^7\text{-}SiR^5_cX_{3-c} \qquad (6)$$

In the formula, $R^7$, $R^5$, X, and c are as defined above.

Examples of the reactive silicon group-containing isocyanate compound represented by the formula (6) include, but are not limited to, γ-trimethoxysilylpropyl isocyanate, γ-triethoxysilylpropyl isocyanate, γ-methyldimethoxysilylpropyl isocyanate, γ-methyldiethoxysilylpropyl isocyanate, γ-(methoxymethyl)dimethoxysilylpropyl isocyanate, trimethoxysilylmethyl isocyanate, triethoxymethylsilylmethyl isocyanate, dimethoxymethylsilylmethyl isocyanate, diethoxymethylsilylmethyl isocyanate, and (methoxymethyl)dimethoxysilylmethyl isocyanate.

In the case where the polymer (A) contains amide segments, the number of the amide segments per molecule of the polymer (A) (the average number of the amide segments) is preferably from 1 to 10, more preferably from 1.5 to 5, and particularly preferably from 2 to 3. If the average number of the amide segments is less than 1, this could lead to insufficient curability. If the average number is more than 10, the polymer (A) could have a high viscosity and be difficult to handle. In order to reduce the viscosity of the curable composition and improve the workability of the curable composition, it is preferable for the polymer (A) to be free of any amide segment.

<<Reactive Silicon Group-Containing (Meth)acrylic Ester Polymer (B)>>

The (meth)acrylic ester polymer (B) has a reactive silicon group represented by the formula (1) in a molecular chain end and/or a side chain. The reactive silicon group of the (meth)acrylic ester polymer (B) may be the same or different from the reactive silicon group of the polyoxyalkylene polymer (A). Specific examples of $R^5$ include methyl, ethyl, chloromethyl, methoxymethyl, and N,N-diethylaminomethyl groups. Preferred are methyl and ethyl groups.

Examples of X include a hydroxy group, hydrogen, halogens, and alkoxy, acyloxy, ketoximate, amino, amide, acid amide, aminooxy, mercapto, and alkenyloxy groups. Among these, alkoxy groups such as methoxy and ethoxy groups are more preferred in terms of moderate hydrolyzability and ease of handling. Particularly preferred are methoxy and ethoxy groups.

Specific examples of the reactive silicon group of the (meth)acrylic ester polymer (B) include, but are not limited to, trimethoxysilyl, triethoxysilyl, tris(2-propenyloxy)silyl, triacetoxysilyl, dimethoxymethylsilyl, diethoxymethylsilyl, dimethoxyethylsilyl, (chloromethyl)dimethoxysilyl, (chloromethyl)diethoxysilyl, (methoxymethyl)dimethoxysilyl, (methoxymethyl)diethoxysilyl, (N,N-diethylaminomethyl)dimethoxysilyl, and (N,N-diethylaminomethyl)diethoxysilyl groups. Among these, methyldimethoxysilyl, trimethoxysilyl, triethoxysilyl, (chloromethyl)dimethoxysilyl, (methoxymethyl)dimethoxysilyl, (methoxymethyl)diethoxysilyl, and (N,N-diethylaminomethyl)dimethoxysilyl groups are preferred since they exhibit high activity and allow for obtaining a cured product having good mechanical properties. In order to obtain a cured product having a high Young's modulus, trimethoxysilyl and triethoxysilyl groups are more preferred, and a trimethoxysilyl groups is even more preferred.

The reactive silicon group content of the (meth)acrylic ester polymer (B) is not limited to a particular range, and is preferably 0.2 mmol/g or more, more preferably 0.5 mmol/g or more, and even more preferably 0.6 mmol/g or more. The reactive silicon group content is preferably 2.0 mmol/g or less. In terms of preventing a decrease in the degree of elongation of the resulting cured product, the reactive silicon group content is more preferably 1.0 mmol/g or less. In order to obtain a cured product having high stiffness and high flexibility, the reactive silicon group content is particularly preferably from 0.5 to 1.0 mmol/g.

The (meth)acrylic ester polymer (B) is a polymer containing constituent monomers including an alkyl (meth) acrylate (b1) having an alkyl having 1 to 3 carbon atoms, a monomer (b2) having a reactive silicon group represented by the formula (1) and a polymerizable unsaturated group, and a macromonomer (b3) that is a (meth)acrylic ester polymer having a polymerizable unsaturated group. As used herein, the term "(meth)acryl" means "acryl and/or methacryl".

(Alkyl (Meth)acrylate (b1))

The alkyl group of the alkyl (meth)acrylate (b1) has 1 to 3 carbon atoms. Specific examples of the alkyl (meth) acrylate (b1) include methyl (meth)acrylate, ethyl (meth)acrylate, n-propyl (meth)acrylate, and isopropyl (meth)acrylate. One of these (meth)acrylates may be used alone, or two or more thereof may be used in combination.

In terms of ensuring both flexibility and high stiffness, the content of the alkyl (meth)acrylate (b1) or the total content of the alkyl (meth)acrylates (b1) is preferably 40% by weight or more, more preferably 45% by weight or more, even more preferably 50% by weight or more, even more preferably 55% by weight or more, and still even more preferably 60% by weight or more based on the total monomers constituting the (meth)acrylic ester polymer (B). In terms of retention of bonding performance, the (total) content of the alkyl (meth)acrylate(s) (b1) is preferably 50% by weight or more, more preferably 55% by weight or more, and even more preferably 60% by weight or more based on the total monomers constituting the (meth)acrylic ester polymer (B). In order to ensure the compatibility with the polyoxyalkylene polymer (A), the (total) content of the alkyl (meth)acrylate(s) (b1) is preferably 70% by weight or less and more preferably 65% by weight or less.

(Monomer (b2) Having Reactive Silicon Group and Polymerizable Unsaturated Group)

Examples of the monomer (b2) having a reactive silicon group and a polymerizable unsaturated group include: compounds having a (meth)acryloxy group and a reactive silicon group, such as 3-(meth)acryloxypropyltrimethoxysilane, 3-(meth)acryloxypropyltriethoxysilane, 3-(meth)acryloxypropyldimethoxymethylsilane, (meth)acryloxymethyltrimethoxysilane, and (meth)acryloxymethyldimethoxymethylsilane; and compounds having a vinyl group and a reactive silicon group, such as vinyltrimethoxysilane and vinyltriethoxysilane. One of these compounds may be used alone, or two or more thereof may be used in combination.

The content of the monomer (b2) having a reactive silicon group and a polymerizable unsaturated group or the total content of the monomers (b2) is preferably from 0.1 to 50% by weight, more preferably from 0.5 to 30% by weight, and even more preferably from 1 to 20% by weight based on the total monomers constituting the (meth)acrylic ester polymer (B).

(Macromonomer (b3))

The macromonomer (b3) is a (meth)acrylic ester polymer having a polymerizable unsaturated group. Although being a polymer in itself, the macromonomer (b3) can, by virtue of the polymerizable unsaturated group, be polymerized with the alkyl (meth)acrylate (b1) and the monomer (b2) having a reactive silicon group and a polymerizable unsaturated group and serves as a constituent monomer of the (meth)acrylic ester polymer (B).

The main chain structure of the macromonomer (b3) is a (meth)acrylic ester polymer. The monomer for forming the main chain structure of the macromonomer (b3) is not limited to a particular type, and various monomers can be used. Examples of the (meth)acrylic monomer include (meth)acrylic acid, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, stearyl (meth)acrylate,

phenyl (meth)acrylate, toluyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, an ethylene oxide adduct of (meth)acrylic acid, 2,2,2-trifluoroethyl (meth)acrylate, 3,3,3-trifluoropropyl (meth)acrylate, 3,3,4,4,4-pentafluorobutyl (meth)acrylate, 2-perfluoroethyl-2-perfluorobutylethyl (meth)acrylate, trifluoromethyl (meth)acrylate, perfluoroethyl (meth)acrylate, bis(trifluoromethyl)methyl (meth)acrylate, 2-trifluoromethyl-2-perfluoroethylethyl (meth)acrylate, 2-perfluorohexylethyl (meth)acrylate, 2-perfluorodecylethyl (meth)acrylate, 2-perfluorohexadecylethyl (meth)acrylate, dimethylaminoethyl (meth)acrylate, chloroethyl (meth)acrylate, tetrahydrofurfuryl (meth)acrylate, glycidyl (meth)acrylate, and 2-aminoethyl (meth)acrylate.

Another monomer copolymerizable with the (meth)acrylic monomer as mentioned above may also be used. Examples of the other monomer include: styrene monomers such as styrene, vinyltoluene, $\alpha$-methylstyrene, chlorostyrene, and styrenesulfonic acid; fluorine-containing vinyl monomers such as perfluoroethylene, perfluoropropylene, and vinylidene fluoride; maleic acid; maleic acid derivatives such as maleic anhydride, monoalkyl maleates, and dialkyl maleates; fumaric acid; fumaric acid derivatives such as monoalkyl fumarates and dialkyl fumarates; maleimide monomers such as maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide; vinyl ester monomers such as vinyl acetate, vinyl propionate, vinyl pivalate, vinyl benzoate, and vinyl cinnamate; olefin monomers such as ethylene and propylene; conjugated diene monomers such as butadiene and isoprene; (meth)acrylamide; (meth)acrylonitrile; and vinyl monomers such as vinyl chloride, vinylidene chloride, allyl chloride, allyl alcohol, ethyl vinyl ether, and butyl vinyl ether. One of these monomers may be used alone, or two or more thereof may be used in combination.

The macromonomer (b3) exhibits polymerizability by virtue of having a polymerizable unsaturated group. In the macromonomer (b3), the polymerizable unsaturated group may be introduced into either molecular chain ends or side chains of the (meth)acrylic ester polymer. In terms of bonding performance, the polymerizable unsaturated group is preferably introduced into the molecular chain ends.

The polymerizable unsaturated group of the macromonomer (b3) is not limited to a particular type, and may be any polymerizable unsaturated group that exhibits polymerizability in common radical polymerization. Examples of the polymerizable unsaturated group include acryloyl, methacryloyl, vinyl, allyl, and methallyl groups. Acryloyl and methacryloyl groups are preferred because they exhibit high polymerizability.

The introduction of the polymerizable unsaturated group into the macromonomer (b3) is not limited to being carried out by a particular method and can be accomplished, for example, using any of the methods (iv) to (vi) listed below.

(iv) A method in which a monomer having two kinds of polymerizable unsaturated groups differing in reactivity (an example of this monomer is allyl acrylate) is copolymerized with another monomer having a (meth)acrylic structure.

(v) A method in which a compound having a polymerizable unsaturated group and a reactive functional group (Z group) (examples of this monomer include acrylic acid and 2-hydroxyethyl acrylate) is copolymerized with another monomer having a (meth)acrylic structure and then the resulting copolymer is reacted with a compound having a polymerizable unsaturated group and a functional group reactive with the Z group (examples of this compound include diethyl isocyanate (meth)acrylate).

(vi) A method in which a monomer having a (meth)acrylic structure is polymerized by living radical polymerization and then polymerizable unsaturated groups are introduced into the molecular chain ends of the resulting polymer.

The above methods may be used in any combination. Among these methods, the method (vi) is preferred because with this method polymerizable unsaturated groups can be introduced into the molecular chain ends. Examples of the "living radical polymerization" include: living radical polymerization using a cobalt porphyrin complex as taught in Journal of the American Chemical Society (J. Am. Chem. Soc.), 1994, vol. 116, p. 7943; living radical polymerization using nitroxide radicals as taught in Japanese Laid-Open Patent Application Publication (Translation of PCT Application) No. 2003-500378; and atom-transfer radical polymerization (ATRP) using an organic halide or a halogenated sulfonyl compound as an initiator and a transition metal complex as a catalyst as taught in Japanese Laid-Open Patent Application Publication No. H11-130931. The atom-transfer radical polymerization is most preferred since with this polymerization the polymerizable unsaturated groups are easily introduced into the molecular chain ends.

A method may also be employed in which a (meth)acrylic polymer is obtained by using a metallocene catalyst and a thiol compound having at least one reactive silicon group in the molecule as taught in Japanese Laid-Open Patent Application Publication No. 2001-040037.

The polymerizable unsaturated group of the macromonomer (b3) preferably has a structure represented by the following formula (7).

$$CH_2=C(R^8)\text{-}COO\text{-}Z \qquad (7)$$

In the formula, $R^8$ represents hydrogen or a methyl group, and Z represents the main chain structure of the macromonomer (b3).

The number-average molecular weight of the macromonomer (b3) is preferably 1,000 or more, more preferably

3,000 or more, and even more preferably 5,000 or more. The number-average molecular weight is preferably 50,000 or less and more preferably 30,000 or less. If the number-average molecular weight of the macromonomer (b3) is small, this tends to lead to a failure to achieve high bonding performance, although resulting in a low viscosity of the (meth)acrylic ester polymer (B). If the number-average molecular weight of the macromonomer (b3) is excessively large, this tends to lead to the (meth)acrylic ester polymer (B) having too high a viscosity which makes handling difficult.

The macromonomer (b3) is not limited to having a particular molecular weight distribution (weight-average molecular weight (Mw)/number-average molecular weight (Mn)), but preferably has a narrow molecular weight distribution. The polydispersity index Mw/Mn is more preferably less than 2.0, even more preferably 1.6 or less, particularly preferably 1.5 or less, more particularly preferably 1.4 or less, even more particularly preferably 1.3 or less, and most preferably 1.2 or less.

The number-average molecular weight (Mn) and weight-average molecular weight (Mw) of the macromonomer (b3) are measured by GPC (polystyrene equivalent). The details of the measurement method are described below in Examples.

The (meth)acrylic ester polymer (B) is constituted by the macromonomer (b3) and other monomers. The main chain of the (meth)acrylic ester polymer (B) will be referred to as "trunk chain", and a polymer chain derived from the macromonomer (b3) and branched from the trunk chain will be referred to as "branched chain". The monomers for forming the trunk chain and branched chain are the monomers as described above, and are not limited to particular types. In order to achieve high bonding performance, the glass transition temperature (Tg) of the branched chain is preferably lower than the Tg of the trunk chain.

The Tg of the trunk chain is preferably from -60 to 150°C, more preferably from 0 to 130°C, and even more preferably from 30 to 100°C.

The Tg of the branched chain is preferably from -100 to 150°C, more preferably from -90°C to 100°C, and even more preferably from -80°C to 50°C. The glass transition temperatures Tg are determined by the following Fox equation.

$$\text{Fox equation: } 1/(Tg(K)) = \Sigma(Mi/Tgi)$$

In the equation, Mi represents the weight fraction of a monomer i component of the polymer and Tgi represents the glass transition temperature (K) of a homopolymer of the monomer i.

The glass transition temperature of the homopolymer is determined with reference to the glass transition temperatures (Tg) indicated in POLYMER HANDBOOK-FOURTH EDITION- (J. Brandrup et al.). When calculating the Tg by the Fox equation, the monomer having a reactive silicon group is excluded from the calculation.

The content of the macromonomer (b3) or the total content of the macromonomers (b3) is preferably from 1 to 50% by weight, more preferably from 5 to 40% by weight, and even more preferably from 10 to 30% by weight based on the total monomers constituting the (meth)acrylic ester polymer (B).

The macromonomer (b3) may be introduced into either the molecular chain ends or side chains of the (meth) acrylic ester polymer (B). In terms of bonding performance, the macromonomer (b3) is preferably introduced into the side chains of the (meth)acrylic ester polymer (B). The average number of the macromonomers per molecule of the (meth) acrylic ester polymer (B) is preferably 0.01 or more, more preferably 0.03 or more, and even more preferably 0.05 or more, and is preferably 2.0 or less, more preferably 1.5 or less, and even more preferably 1.3 or less.

The (meth)acrylic ester polymer (B), which is a polymer containing constituent monomers including at least the alkyl (meth)acrylate (b1) having an alkyl having 1 to 3 carbon atoms, the monomer (b2) having a reactive silicon group and a polymerizable unsaturated group, and the macromonomer (b3), may contain a constituent monomer other than the monomers (b1) to (b3). Examples of the other monomer include (meth)acrylic monomers that are not categorized as the monomers (b1) to (b3) and monomers other than (meth)acrylic monomers. Specifically, the various monomers mentioned above as examples for the macromonomer (b3) can be used.

In an application requiring high strength of the cured product, it is preferable that the glass transition temperature (Tg) of the (meth)acrylic ester polymer (B) be relatively high. Specifically, the glass transition temperature is preferably from 0 to 200°C and more preferably from 20 to 100°C. The glass transition temperature can be adjusted depending on the types and proportions of the monomers constituting the (meth)acrylic ester polymer (B). The Tg can be determined by the Fox equation given above.

The number-average molecular weight of the (meth)acrylic ester polymer (B) is not limited to a particular range. The number-average molecular weight, as determined by GPC analysis as a polystyrene equivalent molecular weight, is preferably from 500 to 50,000, more preferably from 500 to 30,000, and particularly preferably from 1,000 to 10,000. In particular, in order to achieve high bonding performance after moisture-heat exposure test, the number-average molecular weight of the (meth)acrylic ester polymer (B) is preferably 3000 or less.

The (meth)acrylic ester polymer (B) is synthesized by copolymerizing the monomer (b2) having a reactive silicon group and a polymerizable unsaturated group with the other monomers. Through this synthesis, the reactive silicon groups

are randomly introduced into the main chain of the polymer. To further introduce reactive silicon groups into the (meth) acrylic ester polymer (B), the following methods can also be used.

(vii) A method in which the (meth)acrylic ester polymer is produced by polymerization using a mercaptosilane compound having a reactive silicon group as a chain transfer agent. With this method, the reactive silicon groups can be introduced into the ends of the polymer.

(viii) A method in which a compound having a polymerizable unsaturated group and a reactive functional group (V group) is copolymerized and then the resulting copolymer is further reacted with a compound having a reactive silicon group and a functional group reactive with the V group. Specific examples of this method include a method in which 2-hydroxyethyl acrylate is copolymerized and then the resulting copolymer is reacted with an isocyanatosilane having a reactive silicon group and a method in which glycidyl acrylate is copolymerized and the resulting copolymer is reacted with an aminosilane compound having a reactive silicon group.

(ix) A method in which terminal functional groups of a (meth)acrylic ester polymer synthesized by living radical polymerization are modified to introduce reactive silicon groups into the polymer. A (meth)acrylic ester polymer resulting from living radical polymerization permits easy introduction of functional groups into the ends of the polymer. The reactive silicon groups can be introduced into the ends of the polymer by modifying the introduced functional groups.

Examples of the mercaptosilane compound used in the method (vii) and having a reactive silicon group include 3-mercaptopropyldimethoxymethylsilane, 3-mercaptopropyltrimethoxysilane, (mercaptomethyl)dimethoxymethylsilane, and (mercaptomethyl)trimethoxysilane.

The compound used in the method (viii) and having a reactive silicon group and a functional group reactive with the V group include: isocyanatosilane compounds such as 3-isocyanatopropyldimethoxymethylsilane, 3-isocyanatopropyltrimethoxysilane, 3-isocyanatopropyltriethoxysilane, isocyanatomethyldimethoxymethylsilane, isocyanatomethyltrimethoxysilane, and isocyanatomethyltriethoxysilane; epoxysilane compounds such as 3-glycidoxypropyldimethoxymethylsilane, 3-glycidoxypropyltrimethoxysilane, 3-glycidoxypropyltriethoxysilane, glycidoxymethyldimethoxymethylsilane, glycidoxymethyltrimethoxysilane, and glycidoxymethyltriethoxysilane; and aminosilane compounds such as 3-aminopropyldimethoxymethylsilane, 3-aminopropyltrimethoxysilane, 3-aminopropyltriethoxysilane, aminomethyldimethoxymethylsilane, aminomethyltrimethoxysilane, aminomethyltriethoxysilane, N-cyclohexylaminomethyldimethoxymethylsilane, N-cyclohexylaminomethyltrimethoxysilane, and N-cyclohexylaminomethyltriethoxysilane.

In the method (ix), any modification reaction can be used. Examples of the modification reaction method include: a method using a compound having a reactive silicon group and a functional group reactive with the terminal reactive group resulting from polymerization; and a method in which double bonds are introduced into the ends of the polymer using a compound having a double bond and a functional group reactive with the terminal reactive group and subsequently reactive silicon groups are introduced into the ends of the polymer through a process such as hydrosilylation.

Methods for blending the (meth)acrylic ester polymer (B) and the polyoxyalkylene polymer (A) are proposed, for example, in Japanese Laid-Open Patent Application Publication No. S59-122541, Japanese Laid-Open Patent Application Publication No. S63-112642, Japanese Laid-Open Patent Application Publication No. H6-172631, and Japanese Laid-Open Patent Application Publication No. H11-116763. An alternative method is to polymerize a (meth)acrylic ester monomer in the presence of a polyoxypropylene polymer having a reactive silicon group.

The weight ratio between the polyoxyalkylene polymer (A) and the (meth)acrylic ester polymer (B) (the weight ratio (A):(B)) is preferably from 95:5 to 50:50. With the weight ratio in this range, a cured product having flexibility and high shear bond strength can be obtained. In order to ensure both high stiffness and flexibility, the weight ratio (A):(B) is more preferably from 80:20 to 50:50 and even more preferably from 70:30 to 50:50.

<<Epoxy Resin (C)>>

Examples of the epoxy resin (C) include: epichlorohydrin-bisphenol A epoxy resins; epichlorohydrin-bisphenol F epoxy resins; flame retardant epoxy resins such as glycidyl ether of tetrabromobisphenol A; novolac epoxy resins; hydrogenated bisphenol A epoxy resins; glycidyl ether epoxy resins such as glycidyl ether of a bisphenol A propylene oxide adduct; glycidyl ether ester epoxy resins such as glycidyl ether ester of p-hydroxybenzoic acid; m-aminophenol epoxy resins; diaminodiphenylmethane epoxy resins; urethane-modified epoxy resins; alicyclic epoxy resins; N,N-diglycidylaniline; N,N-diglycidyl-o-toluidine; triglycidyl isocyanurate; polyalkylene glycol diglycidyl ether; glycidyl ethers of polyhydric alcohols such as glycerin; hydantoin epoxy resins; and epoxidized products of unsaturated polymers such as petroleum resins. The epoxy resin (C) is not limited to these resins, and any common epoxy resin can be used. Epoxy resins having at least two epoxy groups per molecule are preferred since such epoxy resins exhibit high reactivity during curing and since the use of such epoxy resins is likely to lead to the cured product having a three-dimensional network structure. More preferred epoxy resins include bisphenol A epoxy resins and novolac epoxy resins.

The epoxy resin (C) is preferably used in such an amount that the weight ratio between the total of the polyoxyalkylene polymer (A) and (meth)acrylic ester polymer (B) and the epoxy resin (C) (weight ratio [(A + B):(C)]) is from 90:10 to 50:50. If the proportion of (A + B) is more than 90%, the resulting cured product has a reduced strength. If the

proportion of (A + B) is less than 50%, the resulting cured product has a reduced flexibility and is excessively hard. The weight ratio is more preferably from 80:20 to 60:40 in terms of the balance between flexibility and strength.

Young's modulus is an indicator of stiffness. The Young's modulus of the cured product obtained by curing the curable composition of the present invention can be controlled as appropriate by adjusting the weight ratios among the polyoxyalkylene polymer (A), (meth)acrylic ester polymer (B), and epoxy resin (C) within the ranges as defined in the present invention. For example, to prepare a cured product having a Young's modulus as measured at 23°C of less than 100 MPa, it is preferable to adjust the weight ratio (A):(B) in the range of 95:5 to 60:40 and the weight ratio (A + B):(C) in the range of 90:10 to 60:40.

To prepare a cured product having a Young's modulus as measured at 23°C of 100 MPa or more, it is preferable to adjust the weight ratio (A):(B) in the range of 80:20 to 50:50 and the weight ratio (A + B):(C) in the range of 80:20 to 50:50.

<<Epoxy Resin Curing Agent (D) Having Tertiary Amine Moiety>>

An epoxy resin curing agent having a tertiary amine moiety is preferably used as the epoxy resin curing agent (D) for curing the epoxy resin (C). With the use of the epoxy resin curing agent (D) having a tertiary amine moiety, a cured product having high stiffness, high strength, and high degree of elongation can be obtained.

Any compound having a tertiary amine moiety can be used as the epoxy resin curing agent (D) having a tertiary amine moiety. Specific examples of the compound include, but are not limited to, N,N,N',N'-tetramethyl-1,3-diaminopropane, N,N,N',N'-tetramethyl-1,6-diaminohexane, N,N-dimethylbenzylamine, N-methyl-N-(dimethylaminopropyl)aminoethanol, (dimethylaminomethyl)phenol, 2,4,6-tris(dimethylaminomethyl)phenol, tripropylamine, DBU, DBN, and salts of these tertiary amines. Two or more epoxy resin curing agents (D) may be used in combination, and a known epoxy resin curing agent other than the component (D) may be added.

The epoxy resin curing agent (D) having a tertiary amine moiety is preferably an aromatic amine and more preferably has three or more amino groups. A specific example is 2,4,6-tris(dimethylaminomethyl)phenol.

The amount of the epoxy resin curing agent (D) used is preferably from 0.1 to 50 parts by weight, more preferably from 0.1 to 40 parts by weight, and even more preferably from 0.5 to 30 parts by weight per 100 parts by weight of the epoxy resin (C).

<<Silanol Condensation Catalyst (E)>>

In the present invention, the silanol condensation catalyst (E) is used to accelerate a condensation reaction of the reactive silicon groups of the polyoxyalkylene polymer (A) and (meth)acrylic ester polymer (B) and increase the polymer chain length or induce polymer crosslinking.

Examples of the silanol condensation catalyst (E) include an organotin compound, a metal carboxylate, an amine compound, a carboxylic acid, and an alkoxy metal.

Specific examples of the organotin compound include dibutyltin dilaurate, dibutyltin dioctanoate, dibutyltin bis(butyl maleate), dibutyltin diacetate, dibutyltin oxide, dibutyltin bis(acetylacetonate), dioctyltin bis(acetylacetonate), dioctyltin dilaurate, dioctyltin distearate, dioctyltin diacetate, dioctyltin oxide, a reaction product of dibutyltin oxide and a silicate compound, a reaction product of dioctyltin oxide and a silicate compound, and a reaction product of dibutyltin oxide and a phthalic ester.

Specific examples of the metal carboxylate include tin carboxylate, bismuth carboxylate, titanium carboxylate, zirconium carboxylate, and iron carboxylate. The metal carboxylate may be a combination of any of carboxylic acids mentioned below and any of various metals.

Specific examples of the amine compound include: amines such as octylamine, 2-ethylhexylamine, laurylamine, and stearylamine; nitrogen-containing heterocyclic compounds such as pyridine, 1,8-diazabicyclo[5,4,0]undecene-7 (DBU), and 1,5-diazabicyclo[4,3,0]nonene-5 (DBN); guanidines such as phenylguanidine and diphenylguanidine; biguanides such as butylbiguanide, 1-(o-tolyl)biguanide, and 1-phenylbiguanide; amino group-containing silane coupling agents; and ketimine compounds.

Specific examples of the carboxylic acid include acetic acid, propionic acid, butyric acid, 2-ethylhexanoic acid, lauric acid, stearic acid, oleic acid, linoleic acid, neodecanoic acid, and versatic acid.

Specific examples of the alkoxy metal include: titanium compounds such as tetrabutyl titanate, titanium tetrakis(acetylacetonate), and diisopropoxytitanium bis(ethyl acetoacetate); aluminum compounds such as aluminum tris(acetylacetonate) and diisopropoxyaluminum ethyl acetoacetate; and zirconium compounds such as zirconium tetrakis(acetylacetonate).

The amount of the silanol condensation catalyst (E) used is preferably from 0.001 to 20 parts by weight, more preferably from 0.01 to 15 parts by weight, and particularly preferably from 0.01 to 10 parts by weight per 100 parts by weight of the total of the polyoxyalkylene polymer (A) and (meth)acrylic ester polymer (B).

<<Water (F)>>

Water (F) may be added to the B part of the composition of the present invention. The addition of water accelerates curing of the polyoxyalkylene polymer (A) and (meth)acrylic ester polymer (B) during mixing of the A and B parts.

The amount of the water (F) added is preferably from 0.1 to 10 parts by weight, more preferably from 0.1 to 5 parts by weight, and even more preferably from 0.1 to 2 parts by weight per 100 parts by weight of the total of the polyoxyalkylene polymer (A) and (meth)acrylic ester polymer (B). The composition of the present invention may include a C part containing water (F) in addition to the A and B parts. In this case, the composition of the present invention is a three-part composition.

<<Additional Components>>

Additional components may be contained in the composition of the present invention in addition to the polyoxyalkylene polymer (A), (meth)acrylic ester polymer (B), epoxy resin (C), epoxy resin curing agent (D), silanol condensation catalyst (E), and water (F), and examples of the additional components include a filler, a tackifier, an anti-sagging agent, an antioxidant, a light stabilizer, an ultraviolet absorber, a tackifying resin, and another resin. Further, various additives may be added, if desired, to the curable composition of the present invention in order to adjust the physical properties of the curable composition or a cured product of the composition. Examples of the additives include a plasticizer, a solvent, a diluent, a photocurable material, an oxygen-curable material, a surface modifier, a silicate, a curability modifier, a radical inhibitor, a metal deactivator, an antiozonant, a phosphorus-based peroxide decomposer, a lubricant, a pigment, a fungicide, a flame retardant, and a foaming agent.

<Filler>

Various fillers can be added to the composition of the present invention. Examples of the fillers include heavy calcium carbonate, colloidal calcium carbonate, magnesium carbonate, diatomite, clay, talc, titanium oxide, fumed silica, precipitated silica, crystalline silica, molten silica, silicic anhydride, hydrated silicic acid, alumina, carbon black, ferric oxide, aluminum fines, zinc oxide, activated zinc oxide, PVC powder, PMMA powder, and glass fibers or filaments. To provide thixotropy to the composition, the use of fumed silica is more preferred.

The amount of the filler used is preferably from 1 to 300 parts by weight and particularly preferably from 10 to 250 parts by weight per 100 parts by weight of the total of the polyoxyalkylene polymer (A) and (meth)acrylic ester polymer (B).

An organic or inorganic balloon may be added to reduce the weight (or reduce the specific gravity) of the composition.

<Tackifier>

A tackifier can be added to the composition of the present invention. A silane coupling agent or a reaction product of a silane coupling agent can be added as the tackifier.

Specific examples of the silane coupling agent include: amino group-containing silanes such as γ-aminopropyltrimethoxysilane, γ-aminopropylmethyldimethoxysilane, N-β-aminoethyl-γ-aminopropyltrimethoxysilane, N-β-aminoethyl-γ-aminopropylmethyldimethoxysilane, N-phenyl-γ-aminopropyltrimethoxysilane, and (2-aminoethyl)aminomethyltrimethoxysilane; isocyanate group-containing silanes such as γ-isocyanatopropyltrimethoxysilane, γ-isocyanatopropyltriethoxysilane, 7-isocyanatopropylmethyldimethoxysilane, α-isocyanatomethyltrimethoxysilane, and α-isocyanatomethyldimethoxymethylsilane; mercapto group-containing silanes such as γ-mercaptopropyltrimethoxysilane, γ-mercaptopropyltriethoxysilane, and γ-mercaptopropylmethyldimethoxysilane; and epoxy group-containing silanes such as γ-glycidoxypropyltrimethoxysilane and β-(3,4-epoxycyclohexyl)ethyltrimethoxysilane. One of these tackifiers may be used alone, or two or more thereof may be used as a mixture.

The amount of the tackifier used is preferably from 0.1 to 20 parts by weight and particularly preferably from 0.5 to 10 parts by weight per 100 parts by weight of the total of the polyoxyalkylene polymer (A) and (meth)acrylic ester polymer (B).

<Anti-Sagging Agent>

An anti-sagging agent may be added, if desired, to the composition of the present invention to prevent sagging and improve workability. Examples of the anti-sagging agent include, but are not limited to, polyamide waxes, hydrogenated castor oil derivatives, and metallic soaps such as calcium stearate, aluminum stearate, and barium stearate. One of these anti-sagging agents may be used alone, or two or more thereof may be used in combination.

The amount of the anti-sagging agent used is preferably from 0.1 to 20 parts by weight per 100 parts by weight of

the total of the polyoxyalkylene polymer (A) and (meth)acrylic ester polymer (B).

<Antioxidant>

An antioxidant (anti-aging agent) can be used in the composition of the present invention. The use of an antioxidant can increase the weathering resistance of the cured product. Examples of the antioxidant include hindered phenol antioxidants, monophenol antioxidants, bisphenol antioxidants, and polyphenol antioxidants. Specific examples of the antioxidant are described in Japanese Laid-Open Patent Application Publication No. H4-283259 and Japanese Laid-Open Patent Application Publication No. H9-194731.

The amount of the antioxidant is preferably from 0.1 to 10 parts by weight and particularly preferably from 0.2 to 5 parts by weight per 100 parts by weight of the total of the polyoxyalkylene polymer (A) and (meth)acrylic ester polymer (B).

<Light Stabilizer>

A light stabilizer can be used in the composition of the present invention. The use of a light stabilizer can prevent photooxidative degradation of the cured product. Examples of the light stabilizer include benzotriazole, hindered amine, and benzoate compounds. Particularly preferred are hindered amine compounds.

The amount of the light stabilizer used is preferably from 0.1 to 10 parts by weight and particularly preferably from 0.2 to 5 parts by weight per 100 parts by weight of the total of the polyoxyalkylene polymer (A) and (meth)acrylic ester polymer (B).

<Ultraviolet Absorber>

An ultraviolet absorber can be used in the composition of the present invention. The use of an ultraviolet absorber can increase the surface weathering resistance of the cured product. Examples of the ultraviolet absorber include benzophenone, benzotriazole, salicylate, substituted tolyl, and metal chelate compounds. Particularly preferred are benzotriazole compounds, examples of which include those sold under the names Tinuvin P, Tinuvin 213, Tinuvin 234, Tinuvin 326, Tinuvin 327, Tinuvin 328, Tinuvin 329, and Tinuvin 571 (all of these are manufactured by BASF).

The amount of the ultraviolet absorber used is preferably from 0.1 to 10 parts by weight and particularly preferably from 0.2 to 5 parts by weight per 100 parts by weight of the total of the polyoxyalkylene polymer (A) and (meth)acrylic ester polymer (B).

<Tackifying Resin>

A tackifying resin can be added, if desired, to the composition of the present invention for the purpose of increasing the bond strength or adhesion to a substrate or any other purpose. The tackifying resin used is not limited to a particular resin, and may be a commonly used tackifying resin.

Specific examples of the tackifying resin include terpene resins, aromatic modified terpene resins, hydrogenated terpene resins, terpene-phenol resins, phenol resins, modified phenol resins, xylene-phenol resins, cyclopentadiene-phenol resins, coumarone-indene resins, rosin resins, rosin ester resins, hydrogenated rosin ester resins, xylene resins, low-molecular-weight polystyrene resins, styrene copolymer resins, styrene block copolymers, hydrogenated styrene block copolymers, petroleum resins (such as C5 hydrocarbon resins, C9 hydrocarbon resins, and C5-C9 hydrocarbon copolymer resins), hydrogenated petroleum resins, and DCPD resins. One of these may be used alone, or two or more thereof may be used in combination.

The amount of the tackifying resin used is preferably from 2 to 100 parts by weight, more preferably from 5 to 50 parts by weight, and even more preferably from 5 to 30 parts by weight per 100 parts by weight of the total of the polyoxyalkylene polymer (A) and (meth)acrylic ester polymer (B).

<<Preparation of Curable Composition>>

The curable composition of the present invention is preferably prepared as a two-part composition consisting of the A part including the polyoxyalkylene polymer (A), acrylic ester polymer (B), epoxy resin curing agent (D), and additional components and the B part including the epoxy resin (C), silanol condensation catalyst (E), and additional components. In this case, the A and B parts are mixed before use. The water (F) may be added to the B part to accelerate the curing of the polyoxyalkylene polymer (A) and acrylic ester polymer (B).

The curable composition of the present invention may be cured at room temperature or by heating. In the case where different kinds of materials are joined with an adhesive, in particular when the adhesive is cured by heating, the problem of thermal distortion could arise because of the difference in linear expansion coefficient between the different

kinds of materials. In general, when a reaction-curable adhesive such as an epoxy composition or a urethane composition having high stiffness is cured by heating, the cured adhesive, although having a high bond strength, has a significantly reduced flexibility, due to which the adhesive could suffer thermal distortion during cooling. In contrast, when the curable composition of the present invention is cured by heating to give a cured product having a high bond strength, the cured product has flexibility sufficient for avoiding thermal distortion, and at the same time has high stiffness.

In terms of ensuring both high stiffness and flexibility, the cured product obtained by curing the curable composition of the present invention preferably has a Young's modulus of 100 MPa or more at 23°C and more preferably has a Young's modulus of 200 MPa or more at 23°C. The elongation at break of the cured product is preferably 70% or more and more preferably 80% or more at 23°C. The methods of measuring the Young's modulus and elongation at break are as described below in Examples.

<<Surface Treatment of Adherend>>

The curable composition of the present invention can exhibit high bonding performance to various adherends such as plastics, metals, and composites. When the curable composition is used as an adhesive for a non-polar material such as polypropylene or for an engineering plastic having a rigid molecular chain such as polyphenylene sulfide, the adherend may be surface-treated beforehand by a known technique in order to enhance the bonding performance to the adherend and achieve a stable bond strength. Examples of the surface treatment technique that can be used include sanding treatment, flame treatment, corona discharge, arc discharge, and plasma treatment. The plasma treatment is preferred since this technique causes little damage to the adherend and results in stable bonding performance. The surface treatments are also effective to remove a mold release agent used in molding and remaining on the surface of the adherend.

<<Applications>

The composition of the present invention is suitable for use as an adhesive composition and can be used, for example, in a sealing material, an adhesive, a pressure-sensitive adhesive, and a waterproofing material for buildings, ships, automobiles, and roads. The cured product obtained by curing the curable composition of the present invention has flexibility in spite of having high stiffness; thus, it is more preferable to use the curable composition as an adhesive, in particular as a structural adhesive. In the case where different kinds of materials are joined, such as when aluminum and steel or aluminum and a composite are joined, a temperature change causes thermal distortion due to the difference in linear expansion coefficient between the two materials. In such a case, an adhesive having a high degree of elongation is preferred to accommodate the thermal distortion. Hence, the curable composition of the present invention can be suitably used for joining of different kinds of materials. When different kinds of materials are joined, the joint is preferably covered by a sealer to prevent corrosion. The reactive silicon group-containing polymers as described in the present applications can be used as the sealer. The curable composition of the present invention is preferably used as an adhesive for automobile components such as automobile panels, components of large vehicles such as trucks and buses, components of railcars, components of aircrafts, components of ships, components of electric machines, or various mechanical components.

## EXAMPLES

Hereinafter, the present invention will be specifically described using examples. The examples are not intended to limit the present invention.

In the examples, the number-average molecular weights are GPC molecular weights measured under the following conditions.

Delivery system: HLC-8120 GPC manufactured by Tosoh Corporation
Column: TSK-GEL H Type manufactured by Tosoh Corporation
Solvent: THF
Molecular weight: Polystyrene equivalent
Measurement temperature: 40°C

In the examples, the terminal group equivalent molecular weights are molecular weights each of which was determined by measuring a hydroxy value by the measurement method as specified in JIS K 1557 and an iodine value by the measurement method as specified in JIS K 0070 and making a calculation taking into account the architecture of the organic polymer (in particular, the degree of branching which depends on the polymerization initiator used).

For the polymers (Q) in the examples, the average number of unsaturated carbon-carbon bonds introduced per polymer end was calculated by the following equation.

Average number of introduced unsaturated carbon-carbon bonds = [Unsaturated group concentration (mol/g) of polymer (Q) as determined from iodine value - unsaturated group concentration (mol/g) of precursor polymer (P) as determined from iodine value]/[hydroxy group concentration (mol/g) of precursor polymer (P) as determined from hydroxy value]

For the polymers (A) in the examples, the average number of silyl groups introduced per polymer end was calculated by NMR analysis.

(Synthesis Example 1) Synthesis of Polyoxypropylene Polymer (A-1)

Propylene oxide was polymerized using polyoxypropylene glycol having a number-average molecular weight of about 2,000 as an initiator in the presence of a zinc hexacyanocobaltate-glyme complex catalyst. This polymerization yielded polyoxypropylene (P-1) terminated at both ends by hydroxy groups and having a number-average molecular weight of 28,500 (terminal group equivalent molecular weight of 17,700) and a polydispersity index Mw/Mn of 1.21. Sodium methoxide dissolved in methanol at a concentration of 28% was added in an amount of 1.0 molar equivalents per molar equivalent of the hydroxy groups of the hydroxy-terminated polyoxypropylene (P-1). After methanol was distilled off under vacuum, 1.0 molar equivalents of allyl glycidyl ether was added per molar equivalent of the hydroxy groups of the hydroxy-terminated polyoxypropylene, and the reaction was allowed to proceed at 130°C for 2 hours. Subsequently, 0.28 molar equivalents of sodium methoxide dissolved in methanol was added, then methanol was removed, and 1.79 molar equivalents of allyl chloride was further added to convert the terminal hydroxy groups to allyl groups. To 100 parts by weight of the unpurified, ally-terminated polyoxypropylene were added 300 parts by weight of n-hexane and 300 parts by weight of water, and the mixture was stirred and then centrifuged to remove water. To the resulting hexane solution was then added 300 parts by weight of water, and the mixture was stirred and then centrifuged to remove water. This was followed by volatile matter removal under reduced pressure to remove hexane. Through the above procedures, polyoxypropylene (Q-1) having a terminal structure having two or more unsaturated carbon-carbon bonds was obtained. For the polymer (Q-1), it was found that 2.0 unsaturated carbon-carbon bonds were introduced on average per terminal moiety.

To 100 parts by weight of the polyoxypropylene (Q-1) having 2.0 unsaturated carbon-carbon bonds on average per terminal moiety was added 36 ppm of a platinum-divinyldisiloxane complex (isopropanol solution with a concentration of 3% by weight calculated as the platinum content), and then 2.2 parts by weight of trimethoxysilane was slowly added dropwise under stirring. The liquid mixture was left to allow the reaction to proceed at 90°C for 2 hours, after which trimethoxysilane remaining unreacted was distilled off under reduced pressure to give a reactive silicon group-containing linear polyoxypropylene polymer (A-1) having 1.6 trimethoxysilyl groups on average per terminal moiety, 3.2 silicon groups on average per molecule, and a number-average molecular weight of 28,500.

(Synthesis Example 2) Synthesis of Macromonomer (b3-1)

A reactor from which oxygen was removed was charged with 0.42 parts by weight of cuprous bromide and 20.0 parts by weight of butyl acrylate, and they were stirred under heating. To the mixture were added 8.8 parts by weight of acetonitrile serving as a polymerization solvent and 1.90 parts by weight of ethyl 2-bromoadipate serving as an initiator. The temperature of the liquid mixture was adjusted to about 80°C, and at this moment pentamethyldiethylenetriamine (hereinafter abbreviated as "triamine') was added to initiate a polymerization reaction. Subsequently, 80.0 parts by weight of butyl acrylate was added in batches to allow the polymerization reaction to proceed. During the polymerization, triamine was added at appropriate times to adjust the polymerization rate. The total amount of triamine used for the polymerization was 0.15 parts by weight. After the monomer conversion percentage (polymerization reaction percentage) exceeded about 95%, volatile matter was removed by volatile matter removal under reduced pressure to give a polymer concentrate.

The concentrate was diluted with toluene. To the dilution were added a filtration aid, an adsorbent (KYOWAAD 700SEN, manufactured by Kyowa Chemical Industry Co., Ltd.), and hydrotalcite (KYOWAAD 500SH, manufactured by Kyowa Chemical Industry Co., Ltd.). The mixture was stirred under heating to about 80 to 100°C and then filtered to remove solids. The filtrate was concentrated under reduced pressure to give a roughly purified polymer.

To the roughly purified polymer were added 1.98 parts by weight of potassium acrylate, 100 ppm of 4-hydroxy-TEMPO, and 100 parts by weight of dimethylacetamide serving as a solvent, and the reaction was allowed to proceed at 70°C for 3 hours. After that, the solvent was distilled off under reduced pressure to give a polymer concentrate. The concentrate was diluted with toluene, and the dilution was filtered to remove solids. The filtrate was concentrated under reduced pressure to give a macromonomer (b3-1) terminated at one end by an acryloyl group and having a number-average molecular weight of 10,500 (GPC molecular weight) and a polydispersity index (Mw/Mn) of 1.18.

(Synthesis Example 3) Synthesis of (Meth)acrylic Ester Polymer (B-1)

A four-necked flask equipped with a stirrer was charged with 48.1 parts by weight of isobutanol, which was heated to 105°C under nitrogen atmosphere. To the heated isobutanol was added dropwise over 5 hours a liquid mixture prepared by dissolving 47.0 parts by weight of methyl methacrylate, 10.0 parts by weight of stearyl methacrylate, 30 parts by weight of the macromonomer (b3-1) produced in Synthesis Example 2, 13.0 parts by weight of 3-methacryloxypropyltrimethoxysilane, 3.6 parts by weight of 3-mercaptopropyltrimethoxysilane, and 2.5 parts by weight of 2,2'-azobis(2-methylbutyronitrile) in 22.7 parts by weight of isobutanol. Polymerization was allowed to proceed at 105°C for 2 hours to give an isobutanol solution (solid content = 60%) of a reactive silicon group-containing (meth)acrylic ester polymer (B-1) having a number-average molecular weight of 3,160 (GPC molecular weight). In the solids contained in the solution, the macromonomer content was 0.027 mmol/g, and the reactive silicon group content was 0.68 mmol/g.

(Examples of Synthesis of Other (Meth)acrylic Ester Polymers (B) and (P))

(Meth)acrylic ester polymers (B-2) to (B-7) and (P-1) to (P-4) were obtained in the same manner as the (meth) acrylic ester polymer of Synthesis Example 3, except that the types and proportions of the monomers used were as shown in Table 1.

Additionally, 60 parts by weight of each of the (meth)acrylic ester polymers (B-1) to (B-7) and (P-1) to (P-4) was individually mixed with 40 parts by weight of the reactive silicon group-containing polyoxypropylene polymer (A-1) obtained in Synthesis Example 1, and the compatibility between the two polymers was examined at 23°C. As a result, the (meth)acrylic ester polymers (B-1) to (B-7) and (P-1) to (P-3) exhibited high compatibility with the polyoxypropylene polymer (A-1). However, the (meth)acrylic ester polymer (P-4), in which the content of the alkyl (meth)acrylate (b1) having an alkyl having 1 to 3 carbon atoms was more than 70% by weight, was not compatible with the polyoxypropylene polymer (A-1), and the mixture became cloudy and showed formation of aggregates.

[Table 1]

| (Meth)acrylic ester polymer (B) Types and proportions of monomers | | Tg of homopolymer (°C) | B-1 | B-2 | B-3 | B-4 | B-5 | B-6 | B-7 | P-1 | P-2 | P-3 | P-4 |
|---|---|---|---|---|---|---|---|---|---|---|---|---|---|
| Monomer | MMA[1] | 105 | 47.0 | 55.0 | 55.0 | 55.0 | 55.0 | 55.0 | 60.0 | 60.0 | 35.0 | 20.0 | 75.0 |
| | BA[2] | -55 | | 2.0 | 3.5 | | 7.0 | 11.0 | | 10.0 | 22.0 | 37.0 | |
| | SMA[3] | -100 | 10.0 | 10.0 | 10.0 | 10.0 | 10.0 | 10.0 | 10.0 | 15.0 | 10.0 | 10.0 | 5.0 |
| | Macromonomer (b3-1) | -55 | 30.0 | 20.0 | 20.0 | 20.0 | 20.0 | 20.0 | 20.0 | | 20.0 | 20.0 | 7.0 |
| | TSMA[5] | - | 13.0 | 13.0 | 11.5 | 15.0 | 8.0 | 4.0 | 10.0 | 10.0 | 13.0 | 13.0 | 13.0 |
| | T-MSi[6] | - | 3.6 | 3.6 | 3.6 | 3.6 | 3.6 | 3.6 | 7.2 | 7.2 | 3.6 | 3.6 | 3.6 |
| Mn | | | 3160 | 3340 | 3280 | 3230 | 3170 | 3290 | 2150 | 2300 | 3330 | 3340 | 3140 |
| Mw | | | 8340 | 7780 | 7850 | 7740 | 7730 | 7880 | 5510 | 3900 | 8060 | 8200 | 6370 |
| Macromonomer content (mmol/g) | | | 0.027 | 0.018 | 0.018 | 0.018 | 0.018 | 0.018 | 0.018 | - | 0.018 | 0.018 | 0.0063 |
| Reactive silicon group content (mmol/g) | | | 0.68 | 0.68 | 0.62 | 0.76 | 0.49 | 0.33 | 0.72 | 0.72 | 0.68 | 0.68 | 0.68 |
| Compatibility with polymer (A-1) | | | Compatible | Compatible | Compatible | Compatible | Compatible | Compatible | Compatible | Compatible | Compatible | Compatible | Clouded Aggregates were observed |

(1) Methyl methacrylate
(2) n-Butyl acrylate
(3) Stearyl methacrylate
(5) 3-Methacryloxypropyltrimethoxysilane
(6) 3-Mercaptopropyltrimethoxysilane

(Example 1)

The reactive silicon group-containing polyoxypropylene polymer (A-1) obtained in Synthesis Example 1 and the (meth)acrylic ester polymer (B-1) obtained in Synthesis Example 3 were mixed in such proportions that the amount of the polymer (A-1) was 42 parts by weight and the amount of solids of the polymer (B-1) was 28 parts by weight. After the mixing, isobutanol was removed by heating. The mixture thus obtained was mixed with 7 parts by weight of Ancamine K54 (2,4,6-tris(dimethylaminomethyl)phenol, manufactured by Evonik Industries) serving as the epoxy resin curing agent (D) and 2 parts by weight of KBM-603 (N-(2-aminoethyl)-3-aminopropyltrimethoxysilane, manufactured by Shin-Etsu Chemical Co., Ltd.) serving as the silane coupling agent. The resulting mixture was used as the A part. Further, 30 parts by weight of jER 828 (bisphenol A epoxy resin, manufactured by Mitsubishi Chemical Corporation) serving as the epoxy resin (C), 0.3 parts by weight of NEOSTANN U-810 (dioctyltin dilaurate, manufactured by Nitto Kasei Co., Ltd.) serving as the silanol condensation catalyst (E), and 0.5 parts by weight of water were mixed, and the resulting mixture was used as the B part.

(Dumbbell Tensile Properties)

The A and B parts were mixed, and the mixture was formed into an about 2-mm-thick sheet, which was aged at 23°C and 50%RH for 3 days and then at 50°C for 4 days. A No. 3 dumbbell specimen (JIS K 6251) was punched out of the aged sheet and subjected to a tensile strength test at 23°C and 50%RH to measure the stress at 30% elongation (M30), stress at 50% elongation (M50), stress at 100% elongation (M100), strength at break (TB), elongation at break (EB), and Young's modulus. The tensile properties other than the Young's modulus were measured using Autograph (AGS-J) manufactured by Shimadzu Corporation at a tensile speed of 200 mm/min. The Young's modulus was measured at a tensile speed of 10 mm/min with the displacement in the range of 0.05 to 0.3%. The results are listed in Tables 2 and 3.

(Examples 2 to 8 and Comparative Examples 1 to 7)

Evaluations were conducted in the same manner as for Example 1, except that the material proportions were changed as shown in Tables 2 and 3. The results are listed in Tables 2 and 3.

[Table 2]

| Proportions (parts by weight) | | | Example 1 | Example 2 | Example 3 | Example 4 | Example 5 | Example 6 | Example 7 | Comp. Example 1 | Comp. Example 2 | Comp. Example 3 | Comp. Example 4 | Comp. Example 5 | Comp. Example 6 |
|---|---|---|---|---|---|---|---|---|---|---|---|---|---|---|---|
| A part | Polyoxyalkylene polymer (A) | A-1 | 42 | 42 | 42 | 42 | 42 | 42 | 42 | 70 | 42 | | 42 | 42 | 42 |
| | (Meth)acrylic ester polymer (B) | B-1 | 28 | | | | | | | | 28 | 28 | 28 | | |
| | | B-2 | | 28 | | | | | | | | | | | |
| | | B-3 | | | 28 | | | | | | | | | | |
| | | B-4 | | | | 28 | | | | | | | | | |
| | | B-5 | | | | | 28 | | | | | | | | |
| | | B-6 | | | | | | 28 | | | | | | | |
| | | B-7 | | | | | | | 28 | | | | | | |
| | (Meth)acrylic ester polymer (P) | P-2 | | | | | | | | | | | | 28 | |
| | | P-3 | | | | | | | | | | | | | 28 |
| | Epoxy resin curing agent (D) | Ancamine K54(1) | 7 | 7 | 7 | 7 | 7 | 7 | 7 | 7 | | 7 | | 7 | 7 |
| | Silane coupling agent | KBM-603(2) | 2 | 2 | 2 | 2 | 2 | 2 | 2 | 2 | 2 | 2 | 2 | 2 | 2 |
| | (A):(B) | | 60:40 | 60:40 | 60:40 | 60:40 | 60:40 | 60:40 | 60:40 | 100:0 | 60:40 | 0:100 | 60:40 | 60:40 | 60:40 |
| B part | Epoxy resin (C) | jER828(3) | 30 | 30 | 30 | 30 | 30 | 30 | 30 | 30 | 30 | 30 | | 30 | 30 |
| | Silanol condensation catalyst (E) | NEOSTANN U-810(4) | 0.3 | 0.3 | 0.3 | 0.3 | 0.3 | 0.3 | 0.3 | 0.1 | 0.3 | 0.3 | 0.1 | 0.3 | 0.3 |
| | Water | | 0.5 | 0.5 | 0.5 | 0.5 | 0.5 | 0.5 | 0.5 | 0.5 | 0.5 | 0.5 | 0.5 | 0.5 | 0.5 |
| | (A) + (B):(C) | | 70:30 | 70:30 | 70:30 | 70:30 | 70:30 | 70:30 | 70:30 | 70:30 | 70:30 | 48:52 | 100:0 | 70:30 | 70:30 |

(continued)

| Proportions (parts by weight) | | Example 1 | Example 2 | Example 3 | Example 4 | Example 5 | Example 6 | Example 7 | Comp. Example 1 | Comp. Example 2 | Comp. Example 3 | Comp. Example 4 | Comp. Example 5 | Comp. Example 6 |
|---|---|---|---|---|---|---|---|---|---|---|---|---|---|---|
| Dumbbell tensile properties (23°C for 3days + 50°C for 4 days) | M30 (MPa) | 11.6 | 14.2 | 13.4 | 14.8 | 11.1 | 9.28 | 12.00 | 1.93 | 0.48 | - | 0.7 | 13.3 | 12.3 |
| | M50 (MPa) | 13.2 | 15.7 | 14.9 | 16.4 | 12.5 | 10.9 | 13.0 | 2.63 | 0.90 | - | 1.2 | 15.4 | 14.6 |
| | M100 (MPa) | 15.0 | 16.5 | 15.6 | 17.7 | 13.9 | 12.7 | 13.5 | 4.27 | 3.63 | - | 4.5 | 17.1 | 16.9 |
| | TB (MPa) | 14.8 | 16.0 | 15.4 | 17.2 | 14.6 | 14.5 | 16.0 | 13.5 | 5.77 | - | 5.0 | 16.7 | 16.6 |
| | EB (%) | 150 | 150 | 118 | 122 | 240 | 281 | 290 | 332 | 204 | < 1 | 100 | 120 | 130 |
| | Young's modulus (MPa) | 260 | 309 | 340 | 400 | 218 | 165 | 280 | 15 | 6.1 | > 1000 | 2.5 | 235 | 195 |

(1): 2,4,6-Tris(dimethylaminomethyl)phenol (Air Products and Chemicals, Inc.)
(2): N-(2-Aminoethyl)-3-aminopropyltrimethoxysilane (Shin-Etsu Chemical Co., Ltd.)
(3): Bisphenol A epoxy resin (Mitsubishi Chemical Corporation)
(4): Dioctyltin dilaurate (Nitto Kasei Co., Ltd.)

As seen from Table 2, the cured products obtained in Examples 1 to 7 had high strength and, additionally, the stiffness indicated by the Young's modulus and the degree of elongation indicated by the EB were also high for these cured products. In Comparative Example 1 where the (meth)acrylic acid alkyl ester polymer (B) was not contained, Comparative Example 2 where the epoxy resin curing agent (D) was not contained, and Comparative Example 4 where the epoxy resin (C) was not contained, the stiffness was considerably lower than that in Examples 1 to 7. In Comparative Example 3 where the polyoxyalkylene polymer (A) was not contained, the degree of elongation was considerably low. In Examples 1 and 2 using the (meth)acrylic ester polymer (B-1) or (B-2) containing 40% by weight or more of the alkyl (meth)acrylate (b1) having an alkyl having 1 to 3 carbon atoms, the Young's modulus and the degree of elongation were higher than in Comparative Examples 5 and 6 in which the reactive silicon group content was the same as in Examples 1 and 2 but which used the (meth)acrylic ester polymer (P-2) or (P-3) containing less than 40% by weight of the alkyl (meth)acrylate (b1).

[Table 3]

| Proportions (parts by weight) | | | Example 8 | Comp. Example 7 |
|---|---|---|---|---|
| A part | Polyoxyalkylene polymer (A) | A-1 | 56 | 56 |
| | (Meth)acrylic ester polymer (B) | B-1 | 14 | |
| | (Meth)acrylic ester polymer (P) | P-3 | | 14 |
| | Epoxy resin curing agent (D) | Ancamine K54(1) | 7 | 7 |
| | Silane coupling agent | KBM-603(2) | 2 | 2 |
| | (A):(B) | | 80:20 | 80:20 |
| B part | Epoxy resin (C) | jER828(3) | 30 | 30 |
| | Silanol condensation catalyst (E) | NEOSTANN U-810(4) | 0.3 | 0.3 |
| | Water | | 0.5 | 0.5 |
| | (A) + (B):(C) | | 70:30 | 70:30 |
| Dumbbell tensile properties (23°C for 3days + 50°C for 4 days) | | M30 (MPa) | 6.4 | 6.5 |
| | | M50 (MPa) | 8.0 | 8.0 |
| | | M100 (MPa) | 10.4 | 10.9 |
| | | TB (MPa) | 15.4 | 14.5 |
| | | EB (%) | 320 | 270 |
| | | Young's modulus (MPa) | 90 | 80 |

(1): 2,4,6-Tris(dimethylaminomethyl)phenol (Air Products and Chemicals, Inc.)
(2): N-(2-Aminoethyl)-3-aminopropyltrimethoxysilane (Shin-Etsu Chemical Co., Ltd.)
(3): Bisphenol A epoxy resin (Mitsubishi Chemical Corporation)
(4): Dioctyltin dilaurate (Nitto Kasei Co., Ltd.)

As seen from Table 3, for the cured product obtained in Example 8, the stiffness indicated by the Young's modulus and the degree of elongation indicated by the EB were higher than for the cured product obtained in Comparative Example 7 using the (meth)acrylic ester polymer (P-3) containing less than 40% by weight of the alkyl (meth)acrylate (b1) having an alkyl having 1 to 3 carbon atoms.

(Example 9)

The reactive silicon group-containing polyoxypropylene polymer (A-1) obtained in Synthesis Example 1 and the (meth)acrylic ester polymer (B-7) were mixed in such proportions that the amount of the polymer (A-1) was 42 parts by weight and the amount of solids of the polymer (B-7) was 28 parts by weight. After the mixing, isobutanol was removed by heating. The mixture thus obtained was mixed with 7 parts by weight of Ancamine K54 (2,4,6-tris(dimethylaminomethyl) phenol, manufactured by Evonik Industries) serving as the epoxy resin curing agent (D) and 2 parts by weight of KBM-603 (N-(2-aminoethyl)-3-aminopropyltrimethoxysilane, manufactured by Shin-Etsu Chemical Co., Ltd.) serving as the silane coupling agent. The resulting mixture was used as the A part. Further, 30 parts by weight of jER 828 (bisphenol A epoxy resin, manufactured by Mitsubishi Chemical Corporation) serving as the epoxy resin (C), 5 parts by weight of DAM-05 (alumina, manufactured by Denka Company Limited) serving as a filler, and 3 parts by weight of AEROSIL R-202

(hydrophobic fumed silica, manufactured by Nippon Aerosil Co., Ltd.) serving as a filler were mixed using a planetary mixer under reduced pressure for 2 hours. The mixture thus obtained was further mixed with 0.3 parts by weight of NEOSTANN U-810 (dioctyltin dilaurate, manufactured by Nitto Kasei Co., Ltd.) serving as the silanol condensation catalyst (E) and 0.5 parts by weight of water. The resulting mixture was used as the B part.

(Shear Strength)

The A and B parts were mixed. Aluminum (A5083P) plates were used as adherends, and the mixture of the A and B parts was applied so that the bond area was 25 mm × 12.5 mm and the thickness of the layer of the applied mixture was 0.5 mm. The adherends were thus bonded together by the mixture. The moment when the bonding was completed was defined as a start time, and aging was carried out at 80°C for 30 minutes and then at 23°C and 50%RH for 7 days, after which the tensile shear bond strength was measured at a test speed of 50 mm/min and the state of failure was also inspected. To examine the retention of bonding performance, the sample subjected to the above aging was exposed to an environment of 50°C and 95%RH for 1500 hours, after which the tensile shear bond strength was measured in the same environment and the state of failure was also inspected. For the state of failure, cohesive failure (failure occurring in the adhesive layer) is referred to as CF, and interfacial adhesion failure (peeling occurring at the interface between the adhesive and the adherend) is referred to as AF. The CF and AF were visually inspected. For the case where both of the failures occurred, the percentages of the failures are shown. For example, "C50A50" represents the case where the cohesive failure percentage was 50% and the interfacial adhesion failure percentage was 50%. The results are listed in Table 4.

(Comparative Example 8)

Evaluations were conducted in the same manner as for Example 9, except that the material proportions were changed as shown in Table 4. The results are listed in Table 4.

[Table 4]

| Proportions (parts by weight) | | | Example 9 | Comp. Example 8 |
|---|---|---|---|---|
| A part | Polyoxyalkylene polymer (A) | A-1 | 42 | 42 |
| | (Meth)acrylic ester polymer (B) | B-7 | 28 | |
| | (Meth)acrylic ester polymer (P) | P-1 | | 28 |
| | Epoxy resin curing agent (D) | Ancamine K54(1) | 7 | 7 |
| | Silane coupling agent | KBM-603(2) | 2 | 2 |
| | (A):(B) | | 60:40 | 60:40 |
| B part | Epoxy resin (C) | jER828(3) | 30 | 30 |
| | Filler | DAM-05(4) | 5 | 5 |
| | | AEROSIL R-202(5) | 3 | 3 |
| | Silanol condensation catalyst (E) | NEOSTANN U-810(6) | 0.3 | 0.3 |
| | Water | | 0.5 | 0.5 |
| | (A) + (B):(C) | | 70:30 | 70:30 |
| Shear strength (80°C for 30 min + 23°C for 7days) | | TB (MPa) | 13.5 | 15.0 |
| | | State of failure | CF | CF |
| Shear strength (50°C, 95%RH for 1500 hours) | | TB (MPa) | 14.0 | 13.0 |
| | | State of failure | CF | C40A60 |

(1): 2,4,6-Tris(dimethylaminomethyl)phenol (Evonik Industries)
(2): N-(2-Aminoethyl)-3-aminopropyltrimethoxysilane (Shin-Etsu Chemical Co., Ltd.)
(3): Bisphenol A epoxy resin (Mitsubishi Chemical Corporation)
(4): Alumina (Denka Company Limited)
(5): Hydrophobic fumed silica (Nippon Aerosil Co., Ltd.)
(6): Dioctyltin dilaurate (Nitto Kasei Co., Ltd.)

Table 4 reveals that Example 9 provided an adhesive composition superior in retention of bonding performance to the composition of Comparative Example 8 which used the (meth)acrylic ester polymer (P-1) produced without using the macromonomer (b3). In particular, the use of the (meth)acrylic ester polymer (B-7) having a number-average molecular weight of not more than 3,000 has been demonstrated to give a good result.

## Claims

1. A multi-part curable composition comprising:

   an A part including a polyoxyalkylene polymer (A) having a reactive silicon group, a (meth)acrylic ester polymer (B) having a reactive silicon group, and an epoxy resin curing agent (D), each of the reactive silicon groups of the polyoxyalkylene polymer (A) and the (meth)acrylic ester polymer (B) being represented by the following formula (1): $-SiR^5_cX_{3-c}$ (1), wherein $R^5$ represents a substituted or unsubstituted hydrocarbon group having 1 to 20 carbon atoms, X represents a hydroxy group or a hydrolyzable group, and c represents 0 or 1; and
   a B part including an epoxy resin (C) and a silanol condensation catalyst (E), wherein
   the (meth)acrylic ester polymer (B) is a polymer containing constituent monomers including 40 to 70% by weight of an alkyl (meth)acrylate (b1) having an alkyl having 1 to 3 carbon atoms, a monomer (b2) having a reactive silicon group and a polymerizable unsaturated group, and a macromonomer (b3) that is a (meth)acrylic ester polymer having a polymerizable unsaturated group.

2. The multi-part curable composition according to claim 1, wherein a weight ratio [polyoxyalkylene polymer (A):(meth) acrylic ester polymer (B)] is from 95:5 to 50:50.

3. The multi-part curable composition according to claim 1 or 2, wherein a weight ratio [total of polyoxyalkylene polymer (A) and (meth)acrylic ester polymer (B):epoxy resin (C)] is from 90:10 to 50:50.

4. The multi-part curable composition according to any one of claims 1 to 3, wherein a reactive silicon group content of the (meth)acrylic ester polymer (B) is from 0.5 to 1.0 mmol/g.

5. The multi-part curable composition according to any one of claims 1 to 4, wherein the reactive silicon group of the polyoxyalkylene polymer (A) is a trimethoxysilyl group.

6. The multi-part curable composition according to any one of claims 1 to 5, wherein the reactive silicon group of the (meth)acrylic ester polymer (B) is a trimethoxysilyl group.

7. The multi-part curable composition according to any one of claims 1 to 6, wherein the (meth)acrylic ester polymer (B) has a number-average molecular weight of 3,000 or less, as determined by GPC analysis as a polystyrene equivalent molecular weight, and detailed in the description.

8. The multi-part curable composition according to any one of claims 1 to 7, wherein the epoxy resin curing agent (D) has a tertiary amine moiety.

9. The multi-part curable composition according to any one of claims 1 to 8, wherein a cured product of the curable composition has a Young's modulus of 100 MPa or more, as measured at 23°C and 50%RH at a tensile speed of 10 mm/min with the displacement in the range of 0.05 to 0.3%.

10. The multi-part curable composition according to any one of claims 1 to 9, wherein a cured product of the curable composition has an elongation at break of 70% or more as measured at 23°C and 50%RH at a tensile speed of 200 mm/min.

11. The multi-part curable composition according to any one of claims 1 to 10, wherein the curable composition is a two-part curable composition consisting of the A part and the B part.

12. A structural adhesive comprising the multi-part curable composition according to any one of claims 1 to 11.

13. A cured product obtained by curing the multi-part curable composition according to any one of claims 1 to 11.

**Patentansprüche**

1. Eine mehrkomponentige härtbare Zusammensetzung, umfassend:

   einen Teil A, der ein Polyoxyalkylenpolymer (A) mit einer reaktiven Siliciumgruppe, ein (Meth)acrylesterpolymer (B) mit einer reaktiven Siliciumgruppe und ein Epoxidharz-Härtungsmittel (D) beinhaltet, wobei jede der reaktiven Siliciumgruppen des Polyoxyalkylenpolymers (A) und des (Meth)acrylesterpolymers (B) durch die folgende Formel (1) dargestellt ist: $-SiR^5_cX_{3-c}$ (1), wobei $R^5$ eine substituierte oder unsubstituierte Kohlenwasserstoffgruppe mit 1 bis 20 Kohlenstoffatomen darstellt, X eine Hydroxygruppe oder eine hydrolysierbare Gruppe darstellt und c gleich 0 oder 1 ist; und
   einen Teil B, der ein Epoxidharz (C) und einen Silanolkondensationskatalysator (E) beinhaltet, wobei
   das (Meth)acrylesterpolymer (B) ein Polymer ist, das konstituierende Monomere enthält, die 40 bis 70 Gew.-% eines Alkyl(meth)acrylats (b1) mit einem Alkyl mit 1 bis 3 Kohlenstoffatomen, ein Monomer (b2) mit einer reaktiven Siliciumgruppe und einer polymerisierbaren ungesättigten Gruppe und ein Makromonomer (b3), das ein (Meth)acrylesterpolymer mit einer polymerisierbaren ungesättigten Gruppe ist, beinhalten.

2. Eine mehrkomponentige härtbare Zusammensetzung gemäß Anspruch 1, wobei ein Gewichtsverhältnis [Polyoxyalkylenpolymer (A):(Meth)acrylesterpolymer (B)] von 95:5 bis 50:50 beträgt.

3. Die mehrkomponentige härtbare Zusammensetzung, gemäß Anspruch 1 oder 2, wobei das Gewichtsverhältnis [Gesamtmenge an Polyoxyalkylenpolymer (A) und (Meth)acrylesterpolymer (B):Epoxidharz (C)] von 90:10 bis 50:50 beträgt.

4. Die mehrkomponentige härtbare Zusammensetzung gemäß einem der Ansprüche 1 bis 3, wobei ein Gehalt der reaktiven Siliciumgruppe des (Meth)acrylesterpolymers (B) 0,5 bis 1,0 mmol/g beträgt.

5. Die mehrkomponentige härtbare Zusammensetzung gemäß einem der Ansprüche 1 bis 4, wobei die reaktive Siliciumgruppe des Polyoxyalkylenpolymers (A) eine Trimethoxysilylgruppe ist.

6. Die mehrkomponentige härtbare Zusammensetzung gemäß einem der Ansprüche 1 bis 5, wobei die reaktive Siliciumgruppe des (Meth)acrylesterpolymers (B) eine Trimethoxysilylgruppe ist.

7. Die mehrkomponentige härtbare Zusammensetzung gemäß einem der Ansprüche 1 bis 6, wobei das (Meth) acrylesterpolymer (B) ein zahlenmittleres Molekulargewicht von 3.000 oder weniger aufweist, wie durch GPC-Analyse als ein Polystyrol bezogenes Molekulargewicht bestimmt, und wie in der Beschreibung ausgeführt.

8. Die mehrkomponentige härtbare Zusammensetzung gemäß einem der Ansprüche 1 bis 7, wobei das Epoxidharz-Härtungsmittel (D) eine tertiäre Amineinheit aufweist.

9. Die mehrkomponentige härtbare Zusammensetzung gemäß einem der Ansprüche 1 bis 8, wobei ein gehärtetes Produkt aus der härtbaren Zusammensetzung einen Elastizitätsmodul von 100 MPa oder mehr aufweist, wie gemessen bei 23°C und 50% RH bei einer Zuggeschwindigkeit von 10 mm/min mit einer Verformung im Bereich von 0,05 bis 0,3 %.

10. Die mehrkomponentige härtbare Zusammensetzung gemäß einem der Ansprüche 1 bis 9, wobei ein gehärtetes Produkt der härtbaren Zusammensetzung eine Bruchdehnung von 70 % oder mehr aufweist, wie gemessen bei 23°C und 50% RH bei einer Zuggeschwindigkeit von 200 mm/min.

11. Die mehrkomponentige härtbare Zusammensetzung gemäß einem der Ansprüche 1 bis 10, wobei die härtbare Zusammensetzung eine zweikomponentige härtbare Zusammensetzung ist, die aus dem Teil A und dem Teil B besteht.

12. Ein Strukturklebstoff, umfassend die mehrkomponentige härtbare Zusammensetzung gemäß einem der Ansprüche 1 bis 11.

13. Ein gehärtetes Produkt, das durch Härten der mehrkomponentigen härtbaren Zusammensetzung gemäß einem der Ansprüche 1 bis 11 erhalten wird.

## Revendications

1. Composition durcissable multi-éléments comprenant :

   un élément A incluant un polymère de polyoxyalkylène (A) ayant un groupe silicium réactif, un polymère d'ester (méth)acrylique (B) ayant un groupe silicium réactif, et un agent de durcissement de résine époxy (D), chacun des groupes silicium réactifs du polymère de polyoxyalkylène (A) et du polymère d'ester (méth)acrylique (B) étant représenté par la formule suivante (1) : $-SiR^5_cX_{3-c}$ (1), où $R^5$ représente un groupe hydrocarboné substitué ou non substitué ayant 1 à 20 atomes de carbone, X représente un groupe hydroxy ou un groupe hydrolysable, et c représente 0 ou 1 ; et
   un élément B comprenant une résine époxy (C) et un catalyseur de condensation au silanol (E),
   dans laquelle
   le polymère d'ester (méth)acrylique (B) est un polymère contenant des monomères constitutifs incluant 40 à 70 % en poids d'un alkyl(méth)acrylate (b1) ayant un alkyle portant 1 à 3 atomes de carbone, un monomère (b2) ayant un groupe silicium réactif et un groupe insaturé polymérisable, et un macromonomère (b3) qui est un polymère d'ester (méth)acrylique ayant un groupe insaturé polymérisable.

2. Composition durcissable multi-éléments selon la revendication 1, dans laquelle un rapport en poids [polymère de polyoxyalkylène (A) : polymère d'ester (méth)acrylique (B)] va de 95 : 5 à 50 : 50.

3. Composition durcissable multi-éléments selon la revendication 1 ou 2, dans laquelle un rapport en poids [total du polymère de polyoxyalkylène (A) et du polymère d'ester (méth)acrylique (B) : résine époxy (C)] va de 90 : 10 à 50 : 50.

4. Composition durcissable multi-éléments selon l'une quelconque des revendications 1 à 3, dans laquelle une teneur en groupe silicium réactif du polymère d'ester (méth)acrylique (B) va de 0,5 à 1,0 mmol/g.

5. Composition durcissable multi-éléments selon l'une quelconque des revendications 1 à 4, dans laquelle le groupe silicium réactif du polymère de polyoxyalkylène (A) est un groupe triméthoxysilyle.

6. Composition durcissable multi-éléments selon l'une quelconque des revendications 1 à 5, dans laquelle le groupe silicium réactif du polymère d'ester (méth)acrylique (B) est un groupe triméthoxysilyle.

7. Composition durcissable multi-éléments selon l'une quelconque des revendications 1 à 6, dans laquelle le polymère d'ester (méth)acrylique (B) a un poids moléculaire moyen en nombre de 3000 ou moins, tel que déterminé par analyse GPC en tant que poids moléculaire équivalent en polystyrène, et détaillé dans la description.

8. Composition durcissable multi-éléments selon l'une quelconque des revendications 1 à 7, dans laquelle l'agent de durcissement de résine époxy (D) possède une fraction amine tertiaire.

9. Composition durcissable multi-éléments selon l'une quelconque des revendications 1 à 8, dans laquelle un produit durci de la composition durcissable a un module de Young de 100 MPa ou plus, tel que mesuré à 23°C et à 50 % d'HR à une vitesse de traction de 10 mm/min avec le déplacement dans la plage de 0,05 à 0,3 %.

10. Composition durcissable multi-éléments selon l'une quelconque des revendications 1 à 9, dans laquelle un produit durci de la composition durcissable a un allongement à rupture de 70 % ou plus tel que mesuré à 23°C et à 50 % d'HR à une vitesse de traction de 200 mm/min.

11. Composition durcissable multi-éléments selon l'une quelconque des revendications 1 à 10, dans laquelle la composition durcissable est une composition durcissable à deux éléments consistant en l'élément A et de l'élément B.

12. Adhésif structural comprenant la composition durcissable multi-éléments selon l'une quelconque des revendications 1 à 11.

13. Produit durci obtenu en durcissant la composition durcissable multi-éléments selon l'une quelconque des revendications 1 à 11.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H02214759 A
- JP 2015105324 A
- WO 2013180203 A
- JP 2017019908 A
- WO 2017057719 A
- JP 200230977 A
- JP H6211879 A
- US 5364955 A
- JP H1053637 A
- US 5756751 A
- JP H10204144 A
- EP 0831108 A
- JP 2000169544 A
- JP 2000169545 A
- JP 2003500378 W
- JP H11130931 A
- JP 2001040037 A
- JP 59122541 A
- JP 63112642 A
- JP H6172631 A
- JP H11116763 A
- JP H4283259 A
- JP H9194731 A


### Non-patent literature cited in the description


- Journal of the American Chemical Society. *J. Am. Chem. Soc.*, 1994, vol. 116, 7943